(19) Europäisches Patentamt
European Patent Office
Office européen des brevets

(11) **EP 1 947 837 A2**

(12) **EUROPEAN PATENT APPLICATION**

(43) Date of publication:
**23.07.2008 Bulletin 2008/30**

(51) Int Cl.:
**H04N 1/409** (2006.01)

(21) Application number: **07255086.6**

(22) Date of filing: **31.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.01.2007 JP 2007008674**

(71) Applicant: **Sony Corporation**
**Minato-ku**
**Tokyo (JP)**

(72) Inventor: **Matsushita, Nobuyuki**
**Minato-ku, Tokyo (JP)**

(74) Representative: **DeVile, Jonathan Mark**
**D Young & Co**
**120 Holborn**
**London EC1N 2DY (GB)**

(54) **Imaging and noise removal**

(57)    Disclosed herein is an imaging apparatus, including, an imaging section for acquiring an imaging result, and outputting image data, and a noise suppressing section for suppressing a noise of the image data, and outputting output data, wherein the noise suppressing section includes, a first ε-filter, a second ε-filter, a third ε-filter, a fourth ε-filter, and a weighted-adding unit.

# FIG.3

EP 1 947 837 A2

**Description**

**Field of the Invention**

The present invention relates to imaging and noise removal. Embodiments of the present invention relate to an imaging apparatus, a noise removing device, a noise removing method, a program for the noise removing method, and a recording medium for recording therein the same, and, for example, can be applied to a digital still camera. In embodiments of the present invention, output values from a plurality of epsilon filters, which are called hereinafter ε-filters, and a pixel value of a noted pixel are weighted-added to one another to suppress noises of image data, thereby making it possible to ensure a noise suppressing performance at a level similar to that of a bilateral filter with simple processing and configuration.

**Background of the Invention**

Heretofore, in image processing in a digital still camera or the like, for example, as disclosed in Japanese Patent Laid-Open No. 2004-172726, noises are suppressed by using ε-filters as conditional average filters.
Here, the ε-filter is one which reserves an edge component and outputs an average value. The ε-filter calculates a difference absolute value between a pixel value of a noted pixel and a pixel value of every other pixel within a processing region having the noted pixel at its center. Also, the ε-filter executes processing for performing averaging based on selection of pixels for each of which the difference absolute value is equal to or smaller than a predetermined threshold value, and sets the average value thus calculated in the pixel value of the noted pixel. Therefore, when the coordinates of the noted pixel are (X, Y), a pixel value of the noted pixel is IN(X, Y), and a pixel value of other pixel within the processing region is IN(PX, PY), the ε-filter selects the pixels for each of which a difference absolute value between the pixel value IN(X, Y) and the pixel value IN(PX, PY) is equal to or smaller than a threshold value T. Also, when the number of pixels for each of which the difference absolute value between the pixel value IN(X, Y) and the pixel value IN(PX, PY) is equal to or smaller than the threshold value T is m, the ε-filter averages the pixel values of the m pixels and the noted pixel. It is noted that in the following description, the ε-filter in which the number of taps is N and the threshold value is T is expressed in the form of ε(N, T), and an output value from the ε-filter is expressed in the form of ε(N, T). In addition, the coordinates of other pixel within the processing region are expressed in the form of (PX, PY).
With regard to such noise removal, for example, Japanese Patent Laid-Open No. 2006-180268 proposes a method in which a bilateral filter is used instead of using the ε-filter. Here, the bilateral filter is one of the conditional average filters. Thus, the bilateral filter calculates coefficients $W_s$ and $W_e$ based on a distance between the pixel concerned and the noted pixel, and a difference value between the pixel value of the pixel concerned and the pixel value of the noted pixel, respectively. Also, the bilateral filter reserves an edge component based on averaging processing using those coefficients $W_s$ and $W_e$, and suppresses the noises.

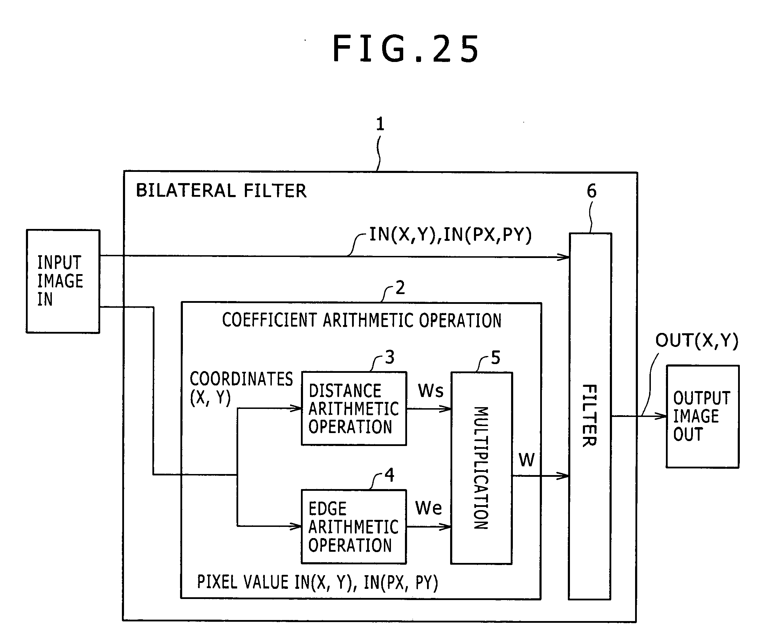

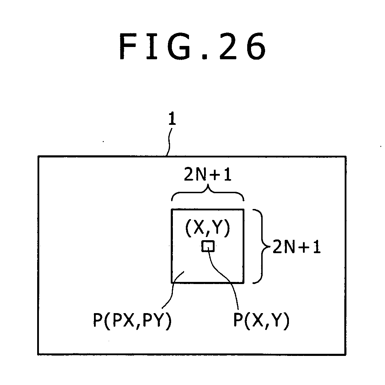

FIG. 25 is a schematic block diagram showing a typical bilateral filter. As shown in FIG. 26, a bilateral filter 1, for example, causes corresponding section to successively scan the noted pixels P(X, Y) in the order of raster scanning, and successively receives as its inputs the coordinates (X, Y) and the pixel value IN(X, Y) of the noted pixel P(X, Y), and the pixel value IN(PX, PY) of other pixel P(PX, PY) within the processing region having the noted pixel P(X, Y) at its center. Here, in FIG. 26, the processing region is a range in which (2N + 1) pixels are disposed in a vertical direction, and (2N + 1) pixels are disposed in a horizontal direction (N: integral number). However, the processing region may be set in such a way that a size in the vertical direction is different from that in the horizontal direction.
In the bilateral filter 1 (refer to FIG. 25), the coordinates (X, Y) of the noted pixel P(X, Y) are inputted to a distance arithmetically operating section 3 of a coefficient arithmetically operating section 2. Also, the pixel value IN(X, Y) of the noted pixel P(X, Y), and the pixel value IN(PX, PY) of other pixel P(PX, PY) within the processing region are inputted to an edge arithmetically operating section 4 of the coefficient arithmetically operating section 2.
The distance arithmetically operating section 3 executes arithmetic operation processing, expressed by an expression (1), using the coordinates (X, Y) of the noted pixel P(X, Y). Thus, with respect to the noted pixel P(S, Y) and other pixel P(PA, PY) within the processing region, the distance arithmetically operating section 3 generates a distance coefficients $W_s(W_s(X, Y, PX, PY))$ a value of which decreases, in accordance with the characteristics of the Gaussian curve, as the distance from the noted pixel P(X, Y) further increases.

$$Ws(X, Y, PX, PY) = \exp\left(-\frac{(X-PX)^2 + (Y-PY)^2}{2\sigma s^2}\right) \quad \cdots\cdots (1)$$

where $\sigma_s$ is a parameter which determines a strength of noise removal.

The edge arithmetically operating section 4 executes arithmetic operation processing, expressed by an expression (2), using the pixel value IN(X, Y) and the pixel value IN(PX, PY). Thus, with respect to the noted pixel P(P, Y) and other pixel P(PX, PY) within the processing region, the edge arithmetically operating section 4 generates an edge coefficient $W_e(W_e(X, Y, PX, PY))$ a value of which decreases, in accordance with the characteristics of the Gaussian curve, as the pixel value recedes from the pixel value IN(X, Y) of the pixel P(X, Y).

$$We(X, Y, PX, PY) = exp\left(-\frac{(IN(X, Y) - IN(PX, PY))^2}{2\sigma_e^2}\right) \quad \cdots\cdots (2)$$

Where $\sigma_e$ is a parameter which determines the strength of the noise removal.

A multiplying section 5 multiplies the distance coefficient $W_s(W_s(X, Y, PX, PY))$ by the edge coefficient $W_e(W_e(X, Y, PX, PY))$ by executing arithmetic operation processing, expressed by an expression (3), thereby calculating a weighting coefficient W(W(X, Y, PX, PY)).

$$W(X, Y, PX, PY) = Ws(X, Y, PX, PY) \cdot We(X, Y, PX, PY) \quad \cdots\cdots (3)$$

A filter section 6 weights each of the pixel value IN(X, Y) of the noted pixel and the pixel value IN(PX, PY) of other pixel within the processing region by using the weighting coefficient W(X, Y, PX, PY) through execution of arithmetic operation processing expressed by an expression (4), thereby executing averaging processing. A bilateral filter 1 outputs a result OUT (X, Y) of the arithmetic operation processing executed in the filter section 6.

$$OUT(X, Y) = \frac{\displaystyle\sum_{PX=X-N}^{X+N} \sum_{PY=Y-N}^{Y+N} W(X, Y, PX, PY) \cdot IN(X, Y)}{\displaystyle\sum^{X+N} \sum^{Y+N} W(X, Y, PX, PY)} \quad \cdots\cdots (4)$$

In removal of the noises using the bilateral filter 1, the edge component can be reserved to smoothly suppress the noises as compared with the case where the ε-filter is used. Therefore, the image quality can be enhanced as compared with the case where the ε-filter is used. However, in the bilateral filter 1, as expressed by the expressions (1) and (2), it is necessary to execute the arithmetic operation processing for the exponential function expressed by "exp" for all the pixels within the processing region. In the end, it is necessary to execute the arithmetic operation processing for the exponential function $\{(2N + 1) \times (2N + 1)\}$ times for a calculation of the pixel value of one pixel. Therefore, there is encountered a problem that an amount of arithmetic operation processing becomes enormous and thus the processing becomes complicated.

In addition, in the bilateral filter 1, the weighting coefficient W differs every noted pixel, which results in that a calculation of a denominator in the expression (4) needs to be carried out every noted pixel while the sufficient precision is ensured. In this case, when the filter section is merely configured by using a divider, a look-up table and the like, there is caused a problem that the configuration of the filter section becomes complicated. In addition, when the filter section is nothing but configured by using software processing, there is caused a problem that an amount of calculation requiring division becomes enormous.

### Summary of Invention

Various respective aspects and features of the invention are defined in the appended claims. Combinations of features from the dependent claims may be combined with features of the independent claims as appropriate and not merely as explicitly set out in the claims.

Embodiments of the present invention have been made in consideration of the respects described above, and it is therefore desirable to provide an imaging apparatus, a noise removing device, a noise removing method, a program for the noise removing method, and a recording medium for recording therein the same each of which is capable of ensuring a noise suppression performance at a level similar to that of a bilateral filter with simple processing and configuration.

In order to attain the desire described above, according to an embodiment of the present invention, there is provided an imaging apparatus, including: an imaging section for acquiring an imaging result, and outputting image data; and a noise suppressing section for suppressing a noise of the image data, and outputting output data; in which the noise suppressing section includes: a first ε-filter for processing the image data; a second ε-filter for processing the image data, the number of taps of the second ε-filter being different from that of the first ε-filter, a threshold value of the second ε-filter being equal to that of the first ε-filter; a third ε-filter for processing the image data, the number of taps of the third ε-filter being equal to that of the first ε-filter, a threshold value of the third ε-filter being different from that of the first ε-filter; a fourth ε-filter for processing the image data, the number of taps of the fourth ε-filter being equal to that of the second ε-filter, a threshold value of the fourth ε-filter being equal to that of the third ε-filter; and a weighted-adding unit for weighted-adding an output value of the first ε-filter, an output value of the second ε-filter, an output value of the third ε-filter, an output value of the fourth ε-filter, and a pixel value of a noted pixel in the image data, and outputting the output data.

According to another embodiment of the present invention, there is provided an imaging apparatus, including: an imaging section for acquiring an imaging result, and outputting image data; and a noise suppressing section for suppressing a noise of the image data, and outputting output data; in which the noise suppressing section includes: a first ε-filter for processing the image data; a second ε-filter for processing the image data, the number of taps of the second ε-filter being different from that of the first ε-filter, a threshold value of the second ε-filter being equal to that of the first ε-filter; a third ε-filter for processing the image data, the number of taps of the third ε-filter being equal to that of the first ε-filter, a threshold value of the third ε-filter being different from that of the first ε-filter; and a weighted-adding unit for weighted-adding an output value of the first ε-filter, an output value of the second ε-filter, an output value of the third ε-filter, and a pixel value of a noted pixel in the image data, and outputting the output data.

According to a still another embodiment of the present invention, there is provided an imaging apparatus, including: an imaging section for acquiring an imaging result, and outputting image data; and a noise suppressing section for suppressing a noise of the image data, and outputting output data; in which the noise suppressing section includes: a first ε-filter for processing the image data; a second ε-filter for processing the image data, a threshold value of the second ε-filter being different from that of the first ε-filter, the number of taps of the second ε-filter being equal to that of the first ε-filter; a third ε-filter for processing the image data, a threshold value of the third ε-filter being equal to that of the second ε-filter, the number of taps of the third ε-filter being different from that of the first ε-filter; and a weighted-adding unit for weighted-adding an output value of the first ε-filter, an output value of the second ε-filter, an output value of the third ε-filter, and a pixel value of a noted pixel in the image data, and outputting the output data.

According to a yet another embodiment of the present invention, there is provided an imaging apparatus, including: an imaging section for acquiring an imaging result, and outputting image data; and a noise suppressing section for suppressing a noise of the image data, and outputting output data; in which the noise suppressing section includes: a first ε-filter for processing the image data; a second ε-filter for processing the image data, the number of taps and/or a threshold value of the second ε-filter being different from that of the first ε-filter; and a weighted-adding unit for weighted-adding an output value of the first ε-filter, an output value of the second ε-filter, and a pixel value of a noted pixel in the image data, and outputting the output data.

According to a further embodiment of the present invention, there is provided a noise removing device, including: a first ε-filter for processing image data; a second ε-filter for processing the image data, the number of taps of the second ε-filter being different from that of the first ε-filter, a threshold value of the second ε-filter being equal to that of the first ε-filter; a third ε-filter for processing the image data, the number of taps of the third ε-filter being equal to that of the first ε-filter, a threshold value of the third ε-filter being different from that of the first ε-filter; a fourth ε-filter for processing the image data, the number of taps of the fourth ε-filter being equal to that of the second ε-filter, a threshold value of the fourth ε-filter being equal to that of the third ε-filter; and a weighted-adding unit for weighted-adding an output value of the first ε-filter, an output value of the second ε-filter, an output value of the third ε-filter, an output value of the fourth ε-filter, and a pixel value of a noted pixel in the image data, and outputting the output data.

According to an even further embodiment of the present invention, there is provided a noise removing method, including the steps of: processing image data by a first ε-filter; processing the image data by a second ε-filter, the number of taps of the second ε-filter being different from that of the first ε-filter, a threshold value of the second ε-filter being equal to that of the first ε-filter; processing the image data by a third ε-filter, the number of taps of the third ε-filter being equal to that of the first ε-filter, a threshold value of the third ε-filter being different from that of the first ε-filter; processing the image data by a fourth ε-filter, the number of taps of the fourth ε-filter being equal to that of the second ε-filter, a threshold value of the fourth ε-filter being equal to that of the third ε-filter; and weighted-adding an output value of the first ε-filter, an output value of the second ε-filter, an output value of the third ε-filter, an output value of the fourth ε-filter, and a pixel value of a noted pixel in the image data, and outputting the output data.

According to a yet further embodiment of the present invention, there is provided a program for a noise removing method, including the steps of: processing image data by a first ε-filter; processing the image data by a second ε-filter, the number of taps of the second ε-filter being different from that of the first ε-filter, a threshold value of the second ε-filter being equal to that of the first ε-filter; processing the image data by a third ε-filter, the number of taps of the third ε-filter being equal to that of the first ε-filter, a threshold value of the third ε-filter being different from that of the first ε-filter; processing the image data by a fourth ε-filter, the number of taps of the fourth ε-filter being equal to that of the second ε-filter, a threshold value of the fourth ε-filter being equal to that of the third ε-filter; and weighted-adding an output value of the first ε-filter, an output value of the second ε-filter, an output value of the third ε-filter, an output value of the fourth ε-filter, and a pixel value of a noted pixel in the image data, and outputting the output data.

According to a yet further embodiment of the present invention, there is provided a recording medium for recording therein a program for a noise removing method of removing a noise of image data, the program for the noise removing method including: processing the image data by a first ε-filter; processing the image data by a second ε-filter, the number of taps of the second ε-filter being different from that of the first ε-filter, a threshold value of the second ε-filter being equal to that of the first ε-filter; processing the image data by a third ε-filter, the number of taps of the third ε-filter being equal to that of the first ε-filter, a threshold value of the third ε-filter being different from that of the first ε-filter; processing the image data by a fourth ε-filter, the number of taps of the fourth ε-filter being equal to that of the second ε-filter, a threshold value of the fourth ε-filter being equal to that of the third ε-filter; and weighted-adding an output value of the first ε-filter, an output value of the second ε-filter, an output value of the third ε-filter, an output value of the fourth ε-filter, and a pixel value of a noted pixel in the image data, and outputting the output data.

According to the embodiments of the present invention, the noise component can be suppressed by executing the weighted-adding processing corresponding to the distance between the pixel concerned and the noted pixel, and the difference value between the pixel value of the pixel concerned and the pixel value of the noted pixel. As a result, the noise suppression performance at the level similar to that of the bilateral filter can be ensured with the simple processing and configuration.

According to embodiments of the present invention, the noise suppression performance at the level similar to that of the bilateral filter can be ensured with the simple processing and configuration.

## Brief Description of the Drawings

Embodiments of the invention will now be described with reference to the accompanying drawings, throughout which like parts are referred to by like references, and in which:

FIG. 1 is a block diagram showing a configuration of a low-frequency noise removing section in a digital still camera according to a first embodiment of the present invention;

FIG. 2 is a block diagram showing a configuration of the digital still camera according to the first embodiment of the present invention;

FIG. 3 is a block diagram showing a configuration of an optical correcting section of the digital still camera shown in FIG. 2;

FIG. 4 is a graphical representation of characteristic curves showing characteristics of an ε-filter and a bilateral filter;

FIG. 5 is a graphical representation of characteristic curves explaining synthesis of outputs from a plurality of ε-filters;

FIG. 6 is a graphical representation of characteristic curves explaining an edge coefficient in the bilateral filter;

FIG. 7 is a graphical representation of characteristic curves explaining synthesis of outputs from a plurality of ε-filters;

FIG. 8 is a graphical representation of characteristic curves explaining the edge coefficient in the bilateral filter when a coefficient $\sigma_e$ is decupled;

FIG. 9 is a graphical representation of characteristic curves explaining synthesis of outputs from a plurality of ε-filters corresponding to an example shown in FIG. 8;

FIG. 10 is a schematic diagram explaining synthesis of outputs from a plurality of ε-filters which are different in the number of taps and a threshold from one another;

FIG. 11 is a flow chart showing a procedure of processing executed in the low-frequency noise removing section shown in FIG. 1;

FIG. 12 is a block diagram showing a low-frequency noise removing section in a digital still camera according to a second embodiment of the present invention;

FIG. 13 is a graphical representation of a characteristic curve showing a relationship between luminance and a parameter $\alpha_s$;

FIG. 14 is a graphical representation of a characteristic curve showing frequency characteristics when a synthesis ratio varies;

FIG. 15 is a graphical representation of a characteristic curve showing a relationship between luminance and a

parameter $\alpha_e$;

FIG. 16 is a graphical representation of a characteristic curve explaining the parameter $\alpha_e$ shown in FIG. 15;

FIG. 17 is a block diagram showing a low-frequency noise removing section in a digital still camera according to a fifth embodiment of the present invention;

FIGS. 18A and 18B are respectively schematic diagrams explaining processing in the $\varepsilon$-filter having the configuration shown in FIG. 1;

FIGS. 19A and 19B are respectively schematic diagrams explaining processing in the low-frequency noise removing section shown in FIG. 17;

FIG. 20 is a block diagram showing a low-frequency noise removing section in a digital still camera according to a sixth embodiment of the present invention;

FIGS. 21A and 21B are respectively schematic diagrams explaining processing in the low-frequency noise removing section shown in FIG. 20;

FIG. 22 is a block diagram showing a low-frequency noise removing section in a digital still camera according to a seventh embodiment of the present invention;

FIGS. 23A and 23B are respectively schematic diagrams explaining processing in the low-frequency noise removing section shown in FIG. 22;

FIGS. 24A and 24B are respectively schematic diagrams useful in explaining a configuration of a low-frequency noise removing section according to another embodiment of the present invention;

FIG. 25 is a schematic block diagram showing a bilateral filter of a related art example; and

FIG. 26 is a schematic block diagram useful in explaining an operation of the bilateral filter shown in FIG. 25.

## Description of the Example Embodiments

Example embodiments of the present invention will be described in detail hereinafter with reference to the accompanying drawings.

First Embodiment

(1) Configuration of the Embodiment

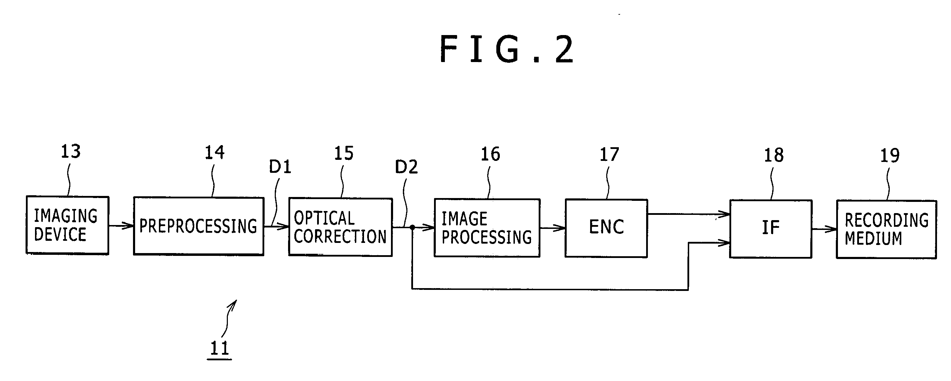

FIG. 2 is a block diagram showing a digital still camera according to a first embodiment of the present invention. In a digital still camera 11, an imaging device 13 is configured with a charge coupled device (CCD) solid-state imaging device, a complementary metal-oxide semiconductor (CMOS) solid-state imaging device or the like. The imaging device 13 subjects an optical image formed on an imaging surface by a lens unit (not shown) to photoelectric conversion processing, and successively outputs pixel values about red, blue and green in the order corresponding to the Bayer arrangement.

A preprocessing section 14 subjects the output signal from the imaging device 13 to correlation double sampling processing, automatic gain adjustment processing, and analog-to-digital conversion processing, and outputs RAW data D1.

An optical correcting section 15, for example, is constituted by a digital signal processor, and subjects the RAW data D1 outputted from the preprocessing section 14 to defect correction processing, and noise suppression processing, and outputs RAW data D2.

An image processing section 16 executes image quality correction processing such as demosaic processing, resolution conversion processing, gamma correction processing, white balance adjustment processing, and image quality correction processing for the RAW data D2 thus inputted thereto to convert the RAW data D2 into image data obtained in the form of a luminance signal and a color-difference signal, and output the resulting image data. In the digital still camera 11, a display device (not shown) displays thereon the image the data on which is obtained through the processing in the image processing section 16, and also displays thereon a monitor image about the imaging results.

An encoder (ENC) 17 compresses the image data outputted from the image processing section 16 by, for example, utilizing an encoding system for a still image such as joint photographic coding experts group (JPEG), and outputs the resulting image data.

The output data outputted from the encoder 17, or the RAW data D2 outputted from the optical correcting section 15 is recorded in a recording medium 19 through an interface (IF) 18. The recording medium 19 is a memory card in this embodiment, and records therein the various data outputted through the interface 18. It is noted that the recording medium 19 is not limited to the memory card, and thus any of the various recording media such as an optical disc and a magnetic disc can be generally applied to the recording medium 19.

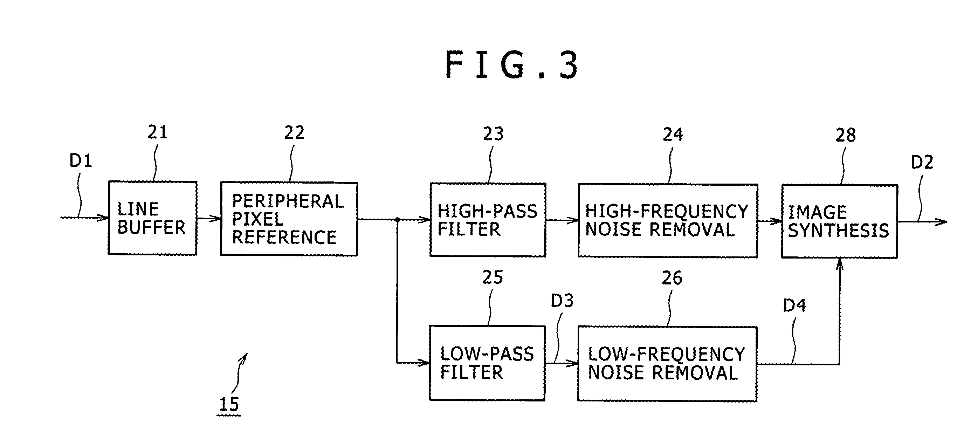

FIG. 3 is a block diagram showing a configuration about the noise removal processing of the optical correcting section 15. The optical correcting section 15 receives as its input the RAW data D1 outputted from the preprocessing section 14 through a line buffer 21.

A peripheral pixel referring section 22 includes a series circuit of a plurality of line buffers each being capable of outputting the image data D1. The peripheral pixel referring section 22 successively receives as its input the RAW data D1 outputted from the line buffer 21 and transfers the RAW data D1 thus received. Along with this operation, the peripheral pixel referring section 22 outputs simultaneously and in parallel the RAW data D1 from the plurality of line buffers, thereby successively setting the noted pixels on a mosaic image configured with the RAW data D1. Finally, the peripheral pixel referring section 22 successively outputs the image data from the noted pixel and the image data from the peripheral pixels corresponding to the noted pixel.

A high-pass filter 23 band-limits the RAW data outputted from the peripheral pixel referring section 22 and selectively outputs a high-frequency component of the RAW data.

A high-frequency noise removing section 24 is configured with a two-dimensional median filter or the like. The high-frequency noise removing section 24 suppresses noises of the output data from the high-pass filter 23 and outputs the resulting data.

A low-pass filter 25 band-limits the RAW data outputted from the peripheral pixel referring section 22, and outputs image data D3 of a low-frequency component of the RAW data.

A low-frequency noise removing section 26 suppresses the noises of the output data D3 from the low-pass filter 25, and outputs resulting image data D4.

An image synthesizing section 28 adds the output data from the high-frequency noise removing section 24, and the output data D4 from the low-frequency noise removing section 26 to each other, and outputs the RAW data D2 for which the noises are suppressed.

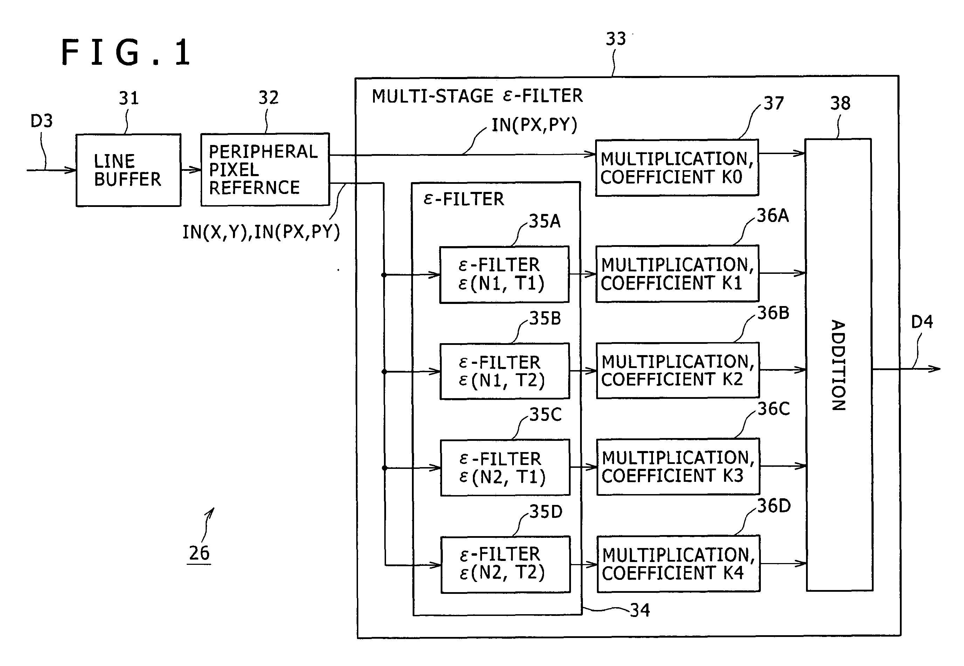

FIG. 1 is a block diagram showing a configuration of the low-frequency noise removing section 26 in detail. The low-frequency noise removing section 26 receives as its input the image data D3 outputted from the low-pass filter 25 through a line buffer 31.

A peripheral pixel referring section 32 includes a series circuit of a plurality of line buffers each being capable of outputting the image data D3. The peripheral pixel referring section 32 successively receives as its input the image data D3 outputted from the line buffer 31 and transfers the image data D3 thus received thereat. Along with this operation, the peripheral pixel referring section 32 outputs simultaneously and in parallel the image data D3 from the plurality of line buffers, thereby successively setting the noted pixels on an image configured with the image data D3. Finally, the peripheral pixel referring section 32 successively outputs the image data from the noted pixel, and the image data from the peripheral pixels corresponding to the noted pixel within the processing region having the noted pixel at its center. Note that, in FIG. 1, the pixel value of the noted pixel $P(X, Y)$ is expressed in the form of $IN(X, Y)$, and the pixel value of other pixel $P(PX, PY)$ within the processing region is expressed in the form of $IN(PX, PY)$ in contrast with the case of FIG. 25.

A multi-stage ε-filter section 33 receives as its input and processes the output data from the peripheral pixel referring section 32 to suppress the noises of the image data D3 with smoothness approximately similar to that in the bilateral filter while reserving an edge component of the image data D3, and outputs the image data D4. Also, in the multi-stage ε-filter section 33, the output data from the peripheral pixel referring section 32 is inputted to each of a plurality of ε-filters 35A to 35D provided in an ε-filter section 34.

That is to say, in the ε-filter section 34, the numbers of taps, and thresholds of the ε-filters 35A to 35D are N1 and T1, N2 and T1, N1 and T2, and N2 and T2, respectively. Here, the number, N1, of taps is smaller than the number, N2, of taps ($N1 < N2$), and the number, N2, of taps is one corresponding to the processing region. In addition, the threshold value T1 is smaller than the threshold value T2 ($T1 < T2$).

Multiplying sections 36A to 36D multiply the output data from the ε-filters 35A to 35D by weighting coefficients K1 to K4, respectively, and output the resulting output data. Also, a multiplying section 37 multiplies the pixel value $IN(X, Y)$ of the noted pixel $P(X, Y)$ by a weighting coefficient K0, and outputs the resulting output data.

An adding section 38 adds the output data from the multiplying sections 36A to 36D, and the output data from the multiplying section 37 to one another, and outputs the image data D4 having the low-frequency component obtained by suppressing the noises.

With the configuration of the ε-filters 35A to 35D, the multiplying sections 36A to 36D, and 37, and the adding section 38, the function of the multi-stage ε-filters section 33 can be understood by being divided into two parts. One part of the function corresponds to the operation in which the multi-stage ε-filter section 33 weighted-adds the output values from the ε-filters 35A and 35B, and the output values from the ε-filters 35C and 35D to one another. Here, as described above, the ε-filters 35A and 35B are different in the number of taps from each other, and are equal in the threshold value to each other. Also, the ε-filters 35C and 35D are different in the number of taps from each other, and are equal in the threshold value to each other. In addition, the other part of the function corresponds to the operation in which the multi-stage ε-filter section 33 weighted-adds the output values from the ε-filters 35A and 35C, the output values from the ε-filters 35B and 35D, and the pixel value $IN(PX, PY)$ of the noted pixel $P(X, Y)$ to one another. Here, as described above, the ε-filters 35A and 35C are different in the threshold value from each other and are equal in the number of taps to each other. Also, the ε-filters 35B and 35D are different in the threshold value from each other and equal in the number of taps to each other.

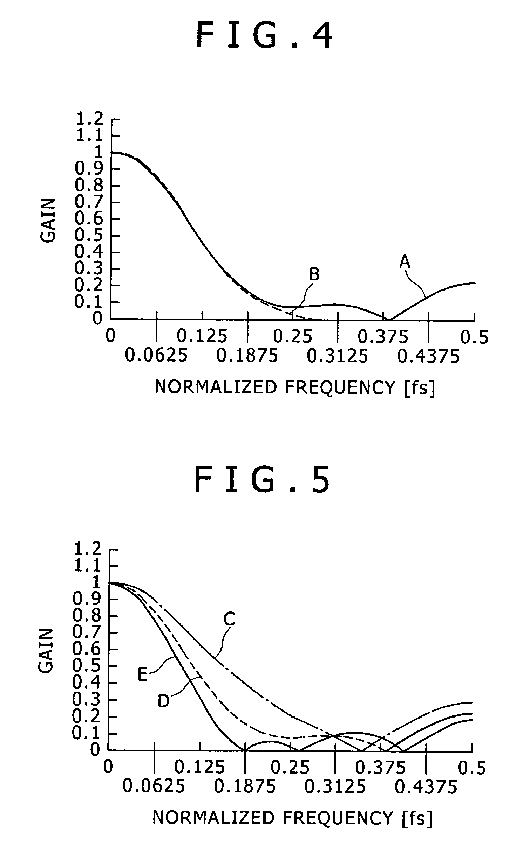

Here, FIG. 4 shows the frequency characteristics, in an X direction, expressed by GA = {7 × ε(7, T) + 6 × ε(3, T)}/13 as indicated by a symbol A. It is noted that, for all input data equal to or less than threshold values, the frequency characteristics stated here are obtained when the output value of the ε-filter ε(7, T) having the number of taps of 7 and the threshold value of T, and the output value of the ε-filter ε(3, T) having the number of taps of 3 and the threshold value of T are weighted-added to each other with the weighting coefficients 7/13 and 6/13, respectively. In addition, the ε-filter ε(7, T) has a tap coefficient, in the X direction, of [1111111], and the ε-filter ε(3, T) has a tap coefficient, in the X direction, of [0011100]. In addition, the frequency characteristics, in the X direction, expressed by GA = {7 × ε(7, T) + 6 × ε(3, T)} /13 are equal to those of the ε-filter having a tap coefficient of [1133311].

On the other hand, in FIG. 4, a symbol B indicates the frequency characteristics of the distance coefficient $W_s$, expressed by the expression (1), when the parameter $\sigma_s$ is 1.65. It is noted that the symbol B indicates the frequency characteristics of the bilateral filter when the parameter $\sigma_s$ is set to 1.65, and the edge coefficient $W_e$ is set to 1.0. In the bilateral filter, the tap coefficient in the X direction is expressed by [1 5 19 48 83 100 83 48 19 5 1]. Comparing the frequency characteristics indicated by the symbol A and the frequency characteristics indicated by the symbol B with each other, it is understood that the frequency characteristics indicated by the symbol A and the frequency characteristics indicated by the symbol B are approximately identical to each other when a gain is equal to or larger than 0.2. Therefore, the frequency characteristics of the bilateral filter when the parameter $\sigma_s$ is set to 1.65, and the edge coefficient $W_e$ is set to one can be approximated by the weighted-addition of the output values of the ε-filters which are different in the number of taps from each other and are equal in the threshold value to each other.

Note that, the following expression (5) is a mathematical expression for verifying that the frequency characteristics of the ε-filter having the tap coefficient of [1133311] can be realized by the weighted-addition of the output values of the ε-filters which have the numbers of taps of 3 and 7, respectively, and are equal in the threshold value to each other.

$$1/13 \times [1\ 1\ 3\ 3\ 3\ 1\ 1] = 1/13 \times [[1\ 1\ 1\ 1\ 1\ 1\ 1] + 2 \times [0\ 0\ 1\ 1\ 1\ 0\ 0]]$$

$$= 7/13 \times 1/7 \times [1\ 1\ 1\ 1\ 1\ 1\ 1] + 6/13 \times 1/3 \times [1\ 1\ 1]$$

$$= (7 \times \varepsilon(7,\ T) + 6 \times \varepsilon(3, T)) / 13 \qquad \cdots\cdots (5)$$

In addition, symbols C to E of FIG. 5 indicate the frequency characteristics in the case where a synthesis ratio of the output value from the ε-filter ε(7, T) to the output value from the ε-filter ε(3, T) is set to 1:3, 2:2 and 3:1, respectively. It is understood from the frequency characteristics of FIG. 5 that when the synthesis ratio is changed, even if the parameter $\sigma_s$ variously differs, the frequency characteristics of the bilateral filter when the edge coefficient $W_e$ is set to one can be realized by the weighted-addition of the output values of the ε-filters which are different in the number of taps from each other and are equal in the threshold value to each other similarly to the above case.

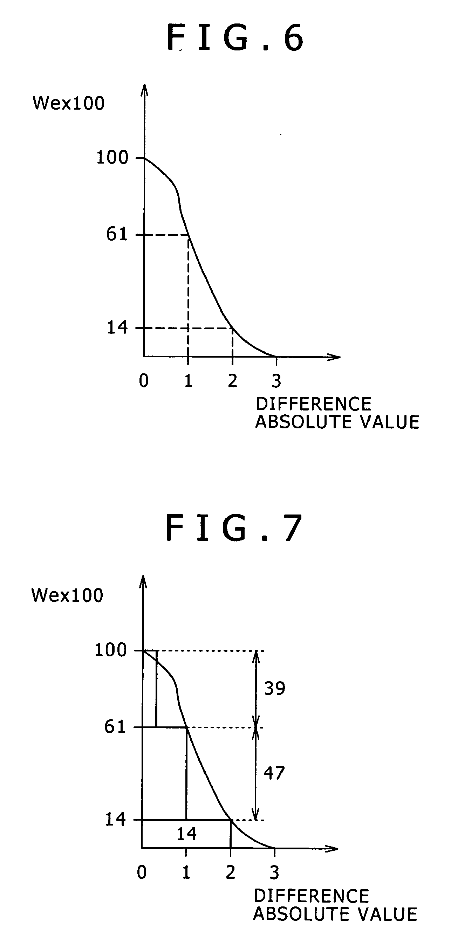

On the other hand, FIG. 6 is a graphical representation of the characteristic curve showing the values of the edge coefficient $W_e$, expressed by the expression (2), when the parameter $\sigma_e$ is set to 1.0. It is noted that the characteristics shown in FIG. 6 are equal to a response of the bilateral filter when the distance coefficient $W_s$ is set to one and the parameter $\sigma_e$ is set to 1.0. In FIG. 6, an axis of ordinate represents a value of the edge coefficient $W_e$ which is centuplicated. Also, an axis of abscissa represents an absolute value of a difference between the pixel value IN(X, Y) of the noted pixel P(X, Y) and the pixel value IN(PX, PY) of other pixel P(PX, PY) within the processing region. As apparent from FIG. 6, the edge coefficient $W_e$ becomes one when the difference absolute value is 0, and the edge coefficient $W_e$ becomes 0.61 when the difference absolute value is 1. In addition, the edge coefficient $W_e$ becomes 0.14 when the distance absolute value is 2, and the edge coefficient $W_e$ approximately becomes approximately zero when the distance absolute value is equal to or larger than 3.

Consequently, the characteristics of the edge coefficient $W_e$ following the Gaussian curve can be said to be equal to the characteristics in which the value decreases step by step with an increase in difference absolute value. Therefore, when decreased values of the stepwise values are set as weighting coefficients, respectively, and the output values of the ε-filters in which the pixel difference values shown in FIG. 6 are set as the threshold values, respectively, are weighted-added by using those weighting coefficients, as shown in FIG. 7, it is possible to ensure the response of the bilateral filter when the distance coefficient $W_s$ is set to 1.0, and the parameter $\sigma_e$ is set to 1.0.

That is to say, when the distance coefficient $W_s$ is set to 1.0, and the parameter $\sigma_e$ is set to 1.0, the response GB of the bilateral filter can be expressed by 14/100 × ε(N, 2) + 47/100 × ε(N, 1) + 39/100 × IN(X, Y). Also, the response GB of the bilateral filter in this case can be realized by the weighted-addition of the output values of the ε-filters which are different in the threshold value from each other and are equal in the number of taps to each other, and the pixel value IN(X, Y) of the noted pixel P(X, Y). Note that, in FIG. 7, numerical characters 14 and 47 are obtained by centuplicating the weights of the ε-filters ε(N, 2) and ε(N, 1), respectively. Also, a numerical character 39 is obtained by centuplicating the weight of the pixel value IN(X, Y) of the noted pixel P(X, Y).

Here, the following expression (6) is a mathematical expression for verifying that the frequency characteristics of the bilateral filter when the distance coefficient $W_s$ is set to one can be realized by the weighted-addition of the output values of the ε-filters which are equal in the number of taps to each other and are different in the threshold value from each other. In this mathematical expression, $OUT_e$(X, Y) represents the output value of the bilateral filter when the distance coefficient $W_s$ is set to one. In addition, ε(N, 0) represents the ε-filter having the threshold T set to zero, and the value thereof is equal to the pixel value IN(X, Y) of the noted pixel P(X, Y). Consequently, from a rearrangement as well of that mathematical expression, it is understood that the frequency characteristics of the bilateral filter when the distance coefficient $W_s$ is set to one can be realized by the weighted-addition of the output values of the ε-filters which are different in the threshold value from each other and are equal in the number of taps to each other, and the pixel value IN(X, Y) of the pixel P(X, Y).

$$OUT_e(X, Y) = [14 \times \varepsilon(N, 2) + (61-14) \times \varepsilon(N, 1) + (100-61) \times \varepsilon(N, 0)] / 100$$

$$= 14/100 \times \varepsilon(N, 2) + 47/100 \times \varepsilon(N, 1) + 39/100 \times \varepsilon(N, 0)$$

$$= 14/100 \times \varepsilon(N, 2) + 47/100 \times \varepsilon(N, 1) + 39/100 \times IN(X, Y) \quad \cdots\cdots (6)$$

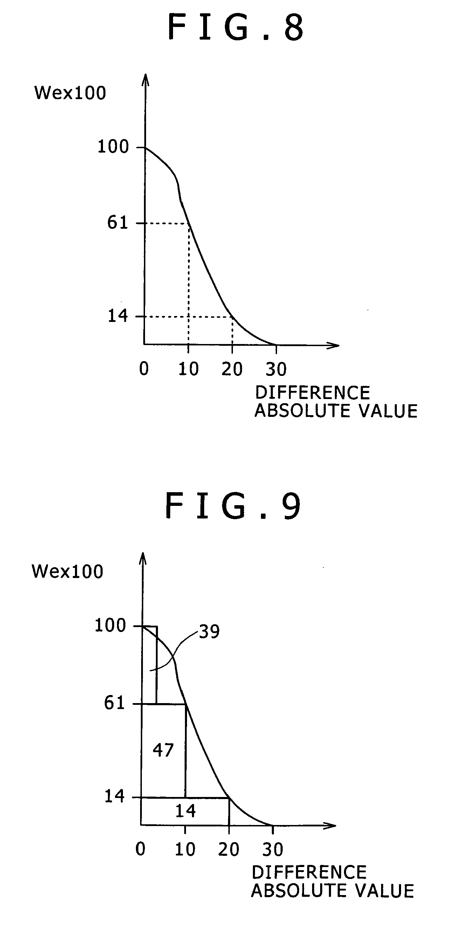

On the other hand, FIG. 8 is a graphical representation of the characteristic curve showing the values of the edge coefficient $W_e$, expressed by the expression (2), when the parameter $\sigma_e$ is set to 10. In this case, the difference absolute value shown in FIG. 6 is decupled when the parameter $\sigma_e$ is set to 1.0. Therefore, in contrast with the case of FIG. 7, as shown in FIG. 9, it is understood that the frequency characteristics of the bilateral filter can be realized by the weighted-addition of the output value of the ε-filter in which the threshold value is decupled so as to correspond to the value of the parameter $\sigma_e$, and the pixel value IN(X, Y) of the noted pixel P(X, Y). Note that, in the example shown in FIG. 9, an approximate precision of the Gaussian curve is deteriorated. However, an increase in the number of stages of the ε-filter makes it possible to enhance the approximate precision.

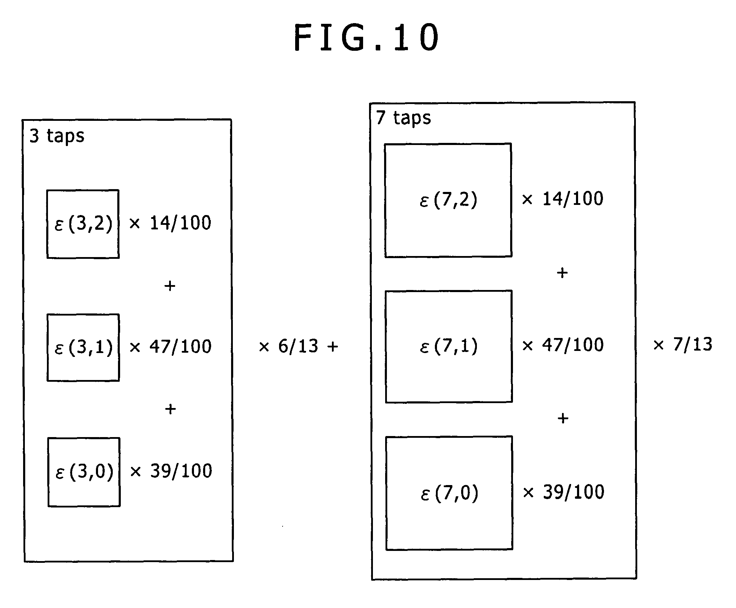

Therefore, the bilateral filter having $\sigma_e$ = 1.65 and $\sigma_e$ = 1.0 set therein, as shown in FIG. 10, can be configured with the processing for weighted-adding the output values of a plurality of ε-filters to one another. That is to say, in an example shown in FIG. 10, output values of an ε-filter ε(3, 2), an ε-filter ε(3, 1) and an ε-filter ε(3, 0), having three taps, in which threshold values are set to 2, 1 and zero, respectively, are weighted-added to one another with weighting coefficients 0.14, 0.47 and 0.39, respectively, to generate a first additional value. In addition, output values of an ε-filter ε(7, 2), an ε-filter ε(7, 1) and an ε-filter ε(7, 0), having seven taps, in which threshold values are set to 2, 1 and zero, respectively, are weighted-added to one another with weighting coefficients 0.14, 0.47 and 0.39, respectively, to generate a second additional value. Also, the first and second additional values are weighted-added to each other with weighting coefficients 6/13 and 7/13, respectively, thereby making it possible to constitute the bilateral filter having $\sigma_s$ = 1.65 and $\sigma_s$ = 1.0 set therein.

Here, the constitution shown in FIG. 10 can be expressed by the following expression (7):

$$(\frac{14}{100} \varepsilon(3, 2) + \frac{47}{100} \varepsilon(3, 1) + \frac{39}{100} \varepsilon(3, 0)) \times \frac{6}{13}$$

$$+ (\frac{14}{100} \varepsilon(7, 2) + \frac{47}{100} \varepsilon(7, 1) + \frac{39}{100} \varepsilon(7, 0)) \times \frac{7}{13} \quad \cdots\cdots (7)$$

In addition, the expression (7) can be expressed by the following expression (8) after being rearranged. Therefore, the weighted-addition of the output values of the ε-filter ε(3, 2) and the ε-filter ε(3, 1) having three taps in which the threshold values are set to 2 and 1, respectively, the output values of the ε-filter ε(7, 2) and the ε-filter ε(7, 1) having seven taps in which the threshold values are set to 2 and 1, respectively, and the pixel value IN(X, Y) of the noted pixel P(X, Y) makes it possible to constitute the bilateral filter having $\sigma_s = 1.65$ and $\sigma_s = 1.0$ set therein.

$$\frac{14 \times 6}{100 \times 13} \varepsilon(3, 2) + \frac{47 \times 6}{100 \times 13} \varepsilon(3, 1)$$

$$+ \frac{14 \times 7}{100 \times 13} \varepsilon(7, 2) + \frac{47 \times 7}{100 \times 13} \varepsilon(7, 1)$$

$$+ \frac{39 \times 6 + 39 \times 7}{100 \times 13} IN(X, Y) \quad \cdots\cdots (8)$$

In the ε-filters 35A to 35D (refer to FIG. 1), the number, N1, of taps is set to 3 and the number, N2, of taps is set to 7, and the thresholds T1 and T2 are set to 1 and 2, respectively, so as to correspond to the expression (8). In addition, the weighting coefficient K0 of the multiplying section 37, and the weighting coefficients K1 to K4 of the multiplying sections 36A to 36D are set to the values expressed by the expression (8), respectively.

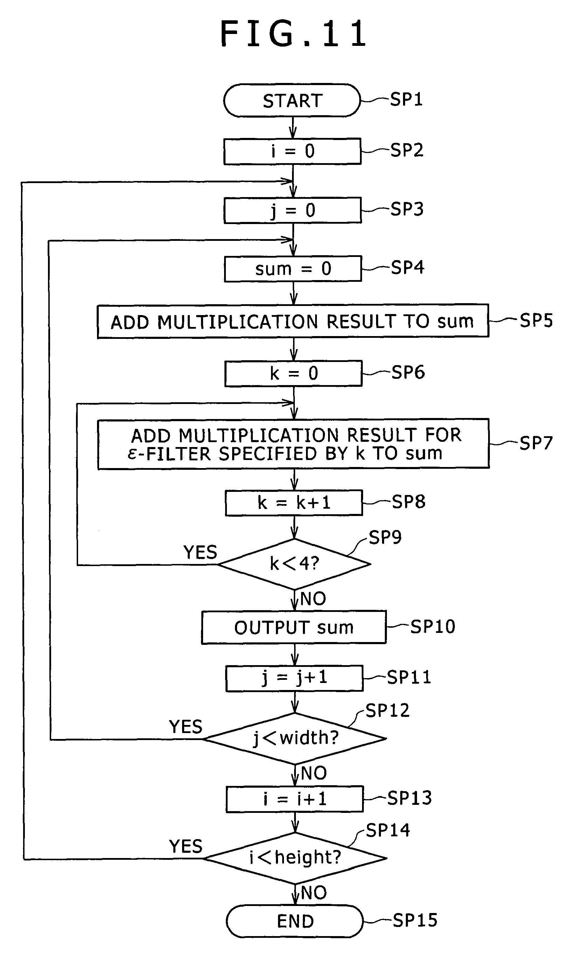

FIG. 11 is a flow chart showing a procedure of the processing executed in the low-frequency noise removing section 26 having the configuration shown in FIG. 1. Here, "width" and "height" represent the number of pixels in the horizontal direction, and the number of pixels in the vertical direction, respectively, in the pixel data D3 as the processing object. Also, "i" and "j" are variables indicating the vertical position and the horizontal position of the noted pixel, respectively, in contrast with "height" and "width".

When this processing procedure is started, the operation of the low-frequency noise removing section 26 proceeds from Step SP1 to SP2 to initialize the variable i indicating the vertical position of the noted pixel to zero. In addition, in subsequent Step SP3, the variable j indicating the horizontal position of the noted pixel is initialized to zero. Subsequently, in Step SP4, the low-frequency noise removing section 26 initializes a variable sum indicating an additional value in the adding section 38 to zero.

Subsequently, in Step SP5, in the low-frequency noise removing section 26, the multiplying section 37 weights the pixel value IN(X, Y) of the noted pixel P(X, Y) with the weighting coefficient K0, and adds the resulting value to the variable sum. In addition, in subsequent Step SP6, the low-frequency noise removing section 26 initializes a variable k which specifies any of the ε-filters 35A to 35D to zero. Also, in subsequent Step SP7, the low-frequency noise removing section 26 processes the output data from the peripheral pixel referring section 32 by using the ε-filter specified with the variable k, weights the output value from the ε-filter specified with the variable k with the corresponding weighting coefficient, and adds the output value thus weighted to the variable sum.

In subsequent Step SP8, the low-frequency noise removing section 26 increments the variable k by one. In addition, in subsequent Step S9, the low-frequency noise removing section 26 determines whether or not the ε-filter in which the processing is not yet completed remains. When an affirmative result is obtained in Step SP9 (YES: in Step SP9), the operation thereof returns back to Step SP7. Therefore, the low-frequency noise removing section 26 switches the ε-filters one after another to weighted-add the output values of the ε-filters to one another. When the processing is completed in all the ε-filters, a negative result is obtained in Step SP9 (NO: in Step SP9), and the operation thereof proceeds to Step SP10.

In Step SP10, the low-frequency noise removing section 26 outputs an additional value about the variable sum. Also, in subsequent Step SP11, the low-frequency noise removing section 26 increments the variable j indicating the horizontal position of the noted pixel by one. Also, in subsequent SP12, the low-frequency noise removing section 26 compares the variable j with the number, width, of pixels in the horizontal direction, and determines whether or not the processing for one line is not yet completed.

When an affirmative result is obtained in Step SP12, the low-frequency noise removing section 26 returns back in its operation to Step SP4, and repeatedly executes the processing for the next noted pixel in the horizontal direction. On the other hand, when a negative result is obtained in Step SP12, the operation of the low-frequency noise removing section 26 proceeds to Step SP13. Thus, the low-frequency noise removing section 26 increments the variable i indicating the vertical position of the noted pixel by one. Next, in subsequent Step SP14, the low-frequency noise removing section 26 compares the variable i with the number, height, of pixels in the vertical direction, and determines whether or not the processing for one picture is not yet completed.

When an affirmative result is obtained in Step SP14, the low-frequency noise removing section 26 returns back in its operation to Step SP3, and starts to execute the processing for the next line. On the other hand, when a negative result is obtained in Step SP14, the operation of the low-frequency noise removing section 26 proceeds to Step SP15, thereby completing the noise suppression processing.

(2) Operation of the Embodiment

With the configuration described above, in the digital still camera 11 (refer to FIG. 2), the preprocessing section 14 subjects the imaging signal outputted from the imaging device 13 to the analog-to-digital conversion processing to generate the RAW data D1. The optical correcting section 15 suppresses the noises of the RAW data D1 thus generated. In addition, the image processing section 16 in the next stage demosaic-processes the RAW data D2 to generate the data on the full-color image. After the data on the full-color image is corrected into the image data obtained in the form of the luminance signal and the color-difference signal, the encoder 17 data-compresses the resulting image data. Also, the recording medium 19 records therein the resulting image data. In addition, when a user makes an instruction to record the RAW data in the recording medium 19, the RAW data D2 outputted from the optical correcting section 15 is recorded in the recording medium 19 as it is.

In the noise removing processing in the optical correcting section 15 (refer to FIG. 3), the RAW data D1 is inputted to the high-pass filter 23 and the low-pass filter 25 through the line buffer 21 and the peripheral pixel referring section 22 to be separated into the high-frequency component and the low-frequency component, respectively. In addition, after the high-frequency component and the low-frequency component are inputted to the high-frequency noise removing section 24 and the low-frequency noise removing section 26, respectively, to suppress the noises, the resulting high-frequency component and low-frequency component are synthesized in the image synthesizing section 28 to generate the RAW data D2. Therefore, in the digital still camera 11, the image data obtained in the form of the RAW data D1 is band-separated into the high-frequency component and the low-frequency component, and the noises of the high-frequency component and the low-frequency component are suppressed. As a result, the noises can be efficiently suppressed in order to reduce the deterioration of the image quality as compared with the case where the noises are suppressed without carrying out the band-separation.

Although with respect to the suppression of the noises on the low-frequency side in the optical correcting section 15 described above, heretofore, the noises are suppressed while the edge component is reserved by applying thereto the ε-filters, thereby preventing the deterioration of the image quality, it is desired to further improve the noise suppression performance. Although using the bilateral filter in the processing for the noise suppression instead of using the ε-filters makes it possible to further enhance the noise suppression performance, the configuration and the processing become complicated.

Thus, in the digital still camera 11 (refer to FIG. 1), the image data D3 having the low-frequency component is inputted to the multi-stage ε-filter section 33 through the line buffer 31 and the peripheral pixel referring section 32. Also, the output values from a plurality of ε-filters 35A to 35D, and the pixel value IN(X, Y) of the noted pixel P(X, Y) are weighted-added to each other. As a result, the noise components are suppressed by executing the weighted-addition processing corresponding to the distance between the pixel concerned and the noted pixel, and the difference value between the pixel value of the pixel concerned and the pixel value of the noted pixel similarly to the case of the bilateral filter.

Consequently, in the digital still camera 11, the noise suppression performance can be dramatically enhanced as compared with the case where the noises are suppressed merely by using the ε-filters. That is to say, more specifically, the edge can be smoothly reserved and thus the noises can be sufficiently suppressed as compared with the case where the noises are suppressed merely by using the ε-filters.

In addition, the noises can be suppressed by using the ε-filters 35A to 35D each having the simple configuration, which results in that the configuration and the processing can be simplified as compared with the case where the bilateral filter is used. That is to say, since the ε-filter in this embodiment is one for executing the averaging processing using the coefficient of 1, a denominator in the division calculation becomes the number of pixels for which the averaging processing is executed. Therefore, the denominator becomes a finite integral value. Thus, for example, the division processing can be executed by using the look-up table or the like. In addition, the calculation for a numerator is simple because the value of the coefficient is 1. As a result, the digital still camera 11 has the feature that the calculation is simple as a whole. Consequently, when the low-frequency noise removing section 26 is configured in the form of software, the processing can be simplified. Also, when the low-frequency noise removing section 26 is configured in the form of hardware, the configuration can be simplified, and the processing speed can be speed up because of execution of the parallel processing.

Moreover, the noises are suppressed by executing the linear synthesis processing using the simple weighting coefficients. Thus, the weighting coefficients are changed over to other ones, and so forth, thereby making it possible to flexibly change the characteristics of the noise removing filter.

(3) Effect of the Embodiment

According to the embodiment of the present invention, the output values from a plurality of $\varepsilon$-filters, and the pixel value of the noted pixel are weighted-added to each other, thereby suppressing the noises of the image data. As a result, the noise suppression performance at the level similar to that of the bilateral filter can be ensured with the simple processing and configuration. That is to say, the output values from the first to fourth $\varepsilon$-filters having the numbers of taps and the thresholds which are set to N1 and T1, N2 and T1, N1 and T2, and N2 and T2, respectively, and the pixel value of the noted pixel are weighted-added to one another, thereby suppressing the noises of the image data. As a result, the noise suppression performance at the level similar to that of the bilateral filter can be ensured with the simple processing and configuration.

Second Embodiment

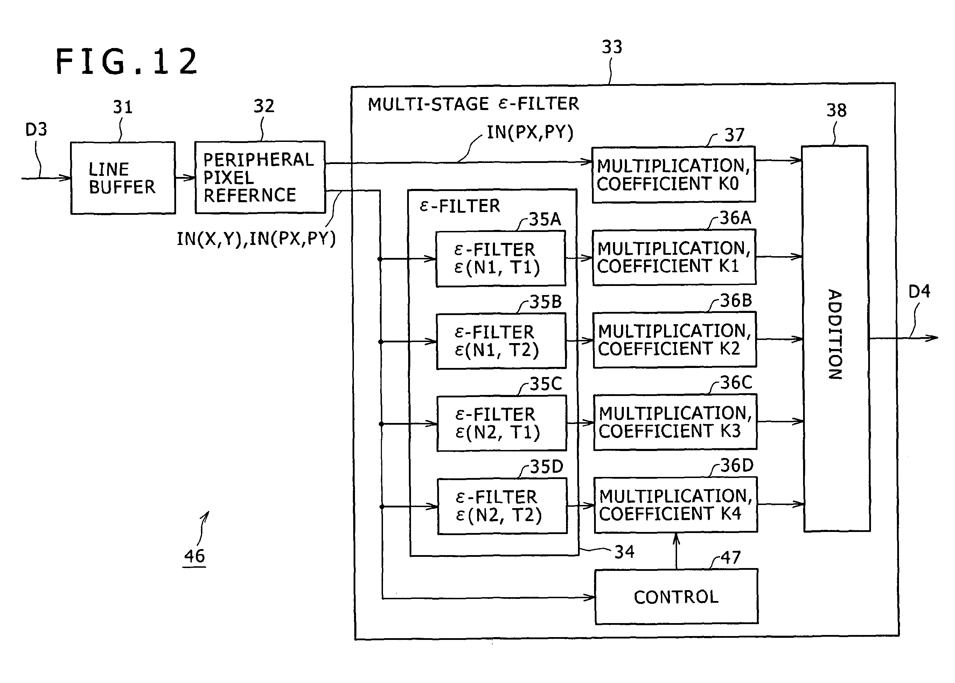

FIG. 12 is a block diagram showing a low-frequency noise removing section which is applied to a digital still camera according to a second embodiment of the present invention in contrast with the first embodiment shown in FIG. 1. Here, the noises become conspicuous in a section, having a small luminance level, of the RAW data by carrying out correction for the pixel values following a $\gamma$ curve applied to the image processing in the image processing section 16 (refer to FIG. 2), or by carrying out correction for the pixel values following the $\gamma$ curve applied to the image development process for the RAW data or the like in a computer or the like. In order to cope with such a situation, in this embodiment, a low-frequency noise removing section 46 makes the weighting coefficients K1 to K4 in the respective multiplying sections 36A to 36D variable, and increases an amount of noise suppressed at the section having the smaller luminance level, thereby suppressing the noises of the image data D3. More specifically, the weighting coefficients K1 to K4 in the respective multiplying sections 36A to 36D are made variable so that the parameter $\sigma_s$ based on which the distance coefficient $W_s$ is calculated in the bilateral filter becomes equivalently large at the darker section. The digital still camera is configured equally to the digital still camera 11 of the first embodiment except for the configuration with which the weighting coefficients K1 to K4 in the respective multiplying sections 36A to 36D are made variable.

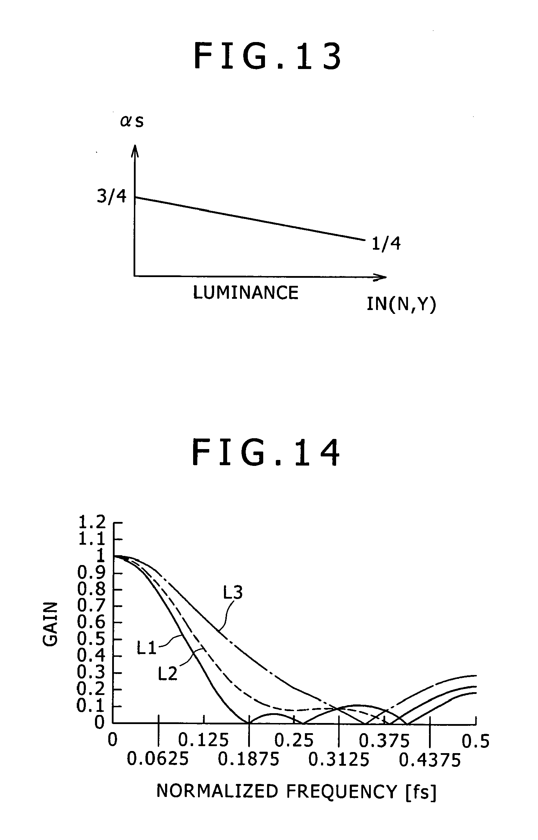

That is to say, in the low-frequency noise removing section 46, a control section 47 receives as its input the image data outputted from the peripheral pixel referring section 32, and calculates an average luminance level every predetermined block. It is noted that the control section 47 may calculate the luminance level every pixel instead of calculating the average luminance level every predetermined block. The control section 47 calculates a parameter $\alpha_s$ so that its value decreases as the luminance level increases so as to follow a characteristic curve shown in FIG. 13 in correspondence to the luminance level thus calculated.

In addition, the weighting coefficients K1 to K4 in the respective multiplying sections 36A to 36D are made variable using the parameter $\alpha_s$ thus calculated so that a synthesis ratio of the 3-tap $\varepsilon$-filter 35A having the threshold value of T1 to the 7-tap $\varepsilon$-filter 35C corresponding thereto changes, and a synthesis ratio of the 3-tap $\varepsilon$-filter 35B having the threshold value of T2 to the 7-tap $\varepsilon$-filter 35D corresponding thereto changes in conjunction with the change of that synthesis ratio as expressed by the following expression (9). Therefore, in this case, the low-frequency noise removing section 46 makes the weighting coefficients K1 to K4 variable so that the output signal component from the $\varepsilon$-filter having the less number of taps increases at the section having the lower luminance level.

$$OUT(x, y) = \alpha s(IN(x, y)) \times \varepsilon (3, T) + (1 - \alpha s(IN(x, y)) \times \varepsilon (7, T) \qquad \cdots\cdots (9)$$

Referring to FIG. 14, symbols L1, L2 and L3 indicate the frequency characteristics, respectively, when the output signal from the 3-tap $\varepsilon$-filter, and the output signal from the 7-tap $\varepsilon$-filter are synthesized at a ratio of 3:1, 1:1 and 1:3. As shown in FIG. 14, when the weighting coefficients K1 to K4 are made variable so that the output signal from the $\varepsilon$-filter having the less number of taps increases, a cut-off frequency can be reduced, and thus an ability to suppress the noises can be increased.

According to the second embodiment of the present invention, the weighting coefficients are made variable so that the output signal from the $\varepsilon$-filter having the less number of taps increases at the section having the lower luminance level, which results in that the noises can be more efficiently removed, thereby obtaining the same effects as those of the first embodiment.

Third Embodiment

In a third embodiment of the present invention, optical shot noises in a bright section are reduced. Therefore, in the third embodiment, the characteristics of the ε-filter are made variable so that the parameter $\sigma_e$ for calculation of the edge coefficient $W_e$ in the bilateral filter becomes equivalently large at the brighter section. It is noted that a digital still camera according to the third embodiment of the present invention is configured equally to the digital still camera of the second embodiment except that the configuration about that the characteristics of the ε-filter are made variable is different from that in the second embodiment. Thus, the third embodiment will be described below by diverting thereinto the configuration shown in FIG. 12.

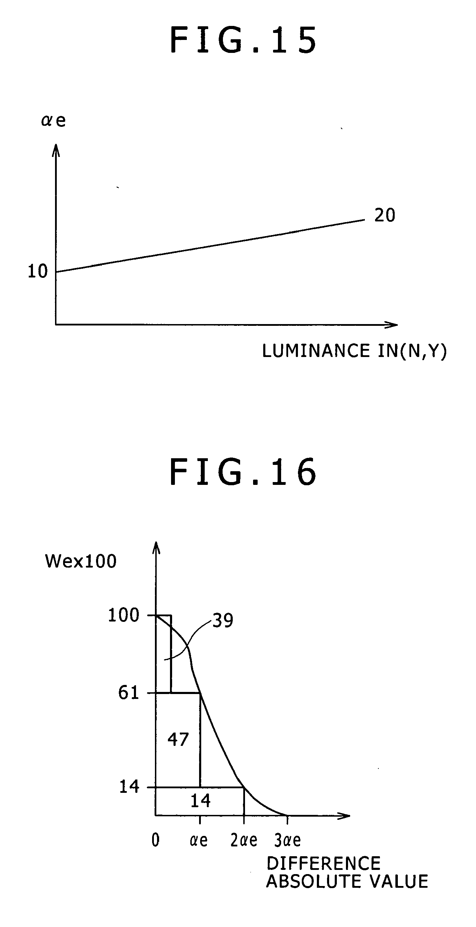

That is to say, in the low-frequency noise removing section 46, the control section 47 receives as its input the image data outputted from the peripheral pixel referring section 32, and calculates an average luminance level every predetermined block. It is noted that the control section 47 may calculate the luminance level every pixel instead of calculating the average luminance level every predetermined block. The control section 47 calculates the parameter $\alpha_e$ in correspondence to the luminance level thus calculated so that the value of the parameter $\alpha_e$ increases as the luminance level increases so as to follow the characteristic curve shown in FIG. 15.

In addition, with this calculated parameter $\alpha_e$, the control section 47 sets each of the threshold values of the ε-filters 35A and 35B having seven taps to $\alpha_e$, and sets each of the threshold values of the ε-filters 35C and 35D having seven taps to $2\alpha_e$ as expressed by the following expression (10). Therefore, in this case, the low-frequency noise removing section 46 makes the threshold values variable so that their values become large at the brighter section while maintaining the ratio among the threshold values of the ε-filters having the numbers of taps different from one another at a given value as shown in FIG. 16, thereby reducing the optical shot noises in the bright section.

$$OUT(x,y) = 39/100 \times IN(x,y) + 47/100 \times \varepsilon(N, \alpha e(IN(x,y)))$$

$$+ 14/100 \times \varepsilon(N, 2\alpha e(IN(x,y))) \quad \cdots\cdots (10)$$

According to the third embodiment of the present invention, the low-frequency noise removing section makes the threshold values variable so that their values become large at the brighter section while maintaining the ratio among the threshold values of the ε-filters having the numbers of taps different from one another at the given value. As a result, the noises are more efficiently removed by reducing the optical shot noises in the bright section. Consequently, it is possible to obtain the same effects as those of the first embodiment.

Fourth Embodiment

In a fourth embodiment, the configurations about the noise removing processing described in the second and third embodiments, respectively, are combined with each other, thereby reducing both the noises in the dark section and the optical shot noises in the bright section. It is noted that a digital still camera according to the fourth embodiment of the present invention is configured equally to the digital still camera of the second embodiment except that the configuration about the noise removing processing is different from that in the second embodiment. Thus, the fourth embodiment will be described below by diverting thereinto the configuration shown in FIG. 12.

That is to say, in the low-frequency noise removing section 46, the control section 47 receives as its input the image data outputted from the peripheral pixel referring section 32, and calculates an average luminance level every predetermined block. It is noted that the control section 47 may calculate the luminance level every pixel instead of calculating the average luminance level every predetermined block. The control section 47 calculates the parameter $\alpha_s$ in correspondence to the luminance level thus calculated so that the value of the parameter $\alpha_e$ decreases as the luminance level increases so as to follow the characteristic curve shown in FIG. 13. In addition, the control section 47 calculates the parameter $\alpha_e$ so that its value increases as the luminance level increases so as to follow the characteristic curve shown in FIG. 15.

In addition, the control section 47 sets each of the threshold values of the ε-filters 35A and 35B having three taps, and each of the threshold values of the ε-filters 35C and 35D having seven taps to $\alpha_e$ and $2\alpha_e$, respectively, by using the parameters $\alpha_e$ and $\alpha_s$ thus calculated as shown in the following expression (11). Also, a synthesis ratio of the 3-tap ε-filter 35A to the corresponding 7-tap ε-filter 35C, and a synthesis of the 3-tap ε-filter 35B to the corresponding 7-tap ε-filter 35D are made variable.

$$OUT(x, y)$$

$$= \alpha s(IN(x, y)) \times (39/100 \times IN(x, y) + 47/100 \times \varepsilon (3, \alpha e(IN(x, y)))$$

$$+ 14/100 \times \varepsilon (3, 2\alpha e(IN(x, y))))$$

$$+ (1 - \alpha s)(IN(x, y)) \times (39/100 \times IN(x, y) + 47/100 \times \varepsilon (7, \alpha e(IN(x, y)))$$

$$+ 14/100 \times \varepsilon (7, 2\alpha e(IN(x, y))))$$

$$\cdots\cdots (1 1)$$

According to the forth embodiment of the present invention, the control section makes the weighting coefficients variable so that the output signal component of the ε-filter having the less number of taps increases at the section having the lower luminance level. Also, the control section makes the threshold values variable so that their values become large at the brighter section while maintaining the ratio among the threshold values of the ε-filters having the numbers of taps different from one another at a given value. As a result, the noises are more effectively removed by reducing both the optical shot noises in the bright section, and the noises following the γ curve in the dark section. Consequently, it is possible to obtain the same effects as those of the first embodiment.

Fifth Embodiment

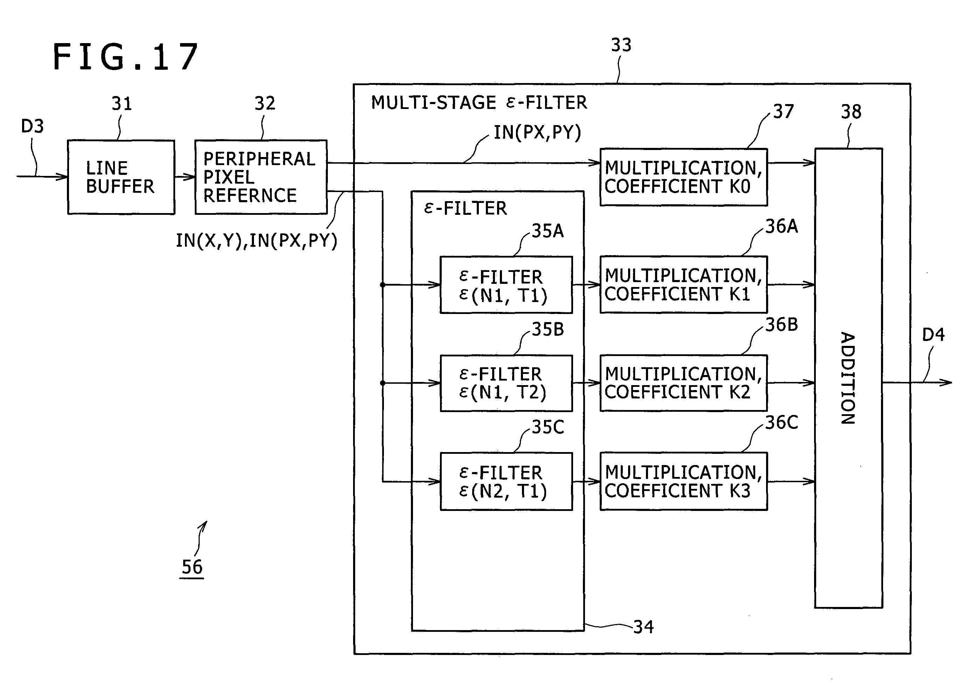

FIG. 17 is a block diagram showing a configuration of a low-frequency noise removing section which is applied to a digital still camera according to a fifth embodiment of the present invention in contrast with the first embodiment shown in FIG. 1. The low-frequency noise removing section 56 is configured equally to each of those in the first to fourth embodiments described above except for omission of the ε-filter 35D having the number, N2, of taps and the threshold value of T2, and the multiplying section 36D associated with the ε-filter 35D.

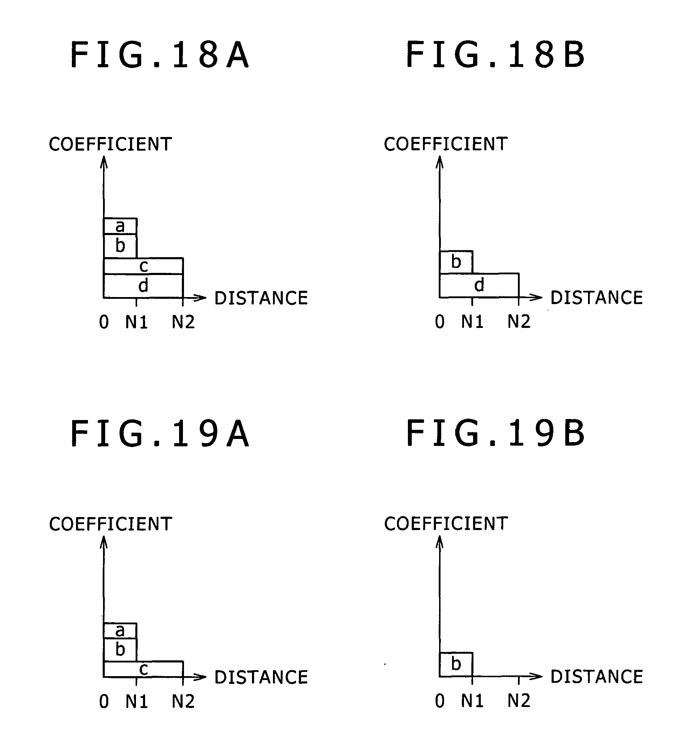

Here, FIGS. 18A and 18B are respectively schematic diagrams useful in explaining the processing in the ε-filters 35A to 35D of the low-frequency noise removing section 26 shown in FIG. 1 in contrast with the case of FIG. 9. It is noted that the outputs from the ε-filters 35A to 35D are designated with reference symbols a to d, respectively, in the descriptions in and after FIG. 18. In the low-frequency noise removing section 26 of the first embodiment shown in FIG. 1, when the difference absolute value is smaller than the threshold value T1, the outputs a to d from the ε-filters 35A to 35D are synthesized, and the resulting synthetic output is outputted (refer to FIG. 18A). On the other hand, when the difference absolute value is larger than the threshold value T1, and is smaller than the threshold value T2, only the outputs b and d from the ε-filters 35B and 35D each having the threshold value of T2 are synthesized, and the resulting synthetic output is outputted (refer to FIG. 18B). Consequently, by executing the weighted-addition processing corresponding to the distance between the pixel concerned and the noted pixel, and the difference value between the pixel value of the pixel concerned and the pixel value of the noted pixel, the noise components can be suppressed, thereby enhancing the noise removal performance as compared with the case where the ε-filters are merely used.

Here, in the fifth embodiment shown in FIG. 17, as shown in FIGS. 19A and 19B, when the difference absolute value is smaller than the threshold value T1, the outputs a to c of the ε-filters 35A to 35C are synthesized, and the resulting synthetic output is outputted (refer to FIG. 19A). On the other hand, when the difference absolute value is larger than the threshold value T1 and is smaller than the threshold value T2, only the output b from the ε-filter 35B having the threshold value of T2 is outputted (refer to FIG. 19B). Consequently, in the fifth embodiment as well shown in FIG. 17, by executing the weighted-addition processing corresponding to the distance between the pixel concerned and the noted pixel, and the difference value between the pixel value of the pixel concerned and the pixel value of the noted pixel, the noise components can be suppressed, thereby enhancing the noise removal performance as compared with the case where the ε-filters are merely used.

According to the fifth embodiment of the present invention, when the output values of the first ε-filter, the second ε-filter which is different in the number of taps from the first ε-filter, and the third ε-filter which is different in the threshold value from the first ε-filter, and the pixel value of the noted pixel are merely weighted-added to each other, it is possible to obtain the same effects as those of the first embodiment.

Sixth Embodiment

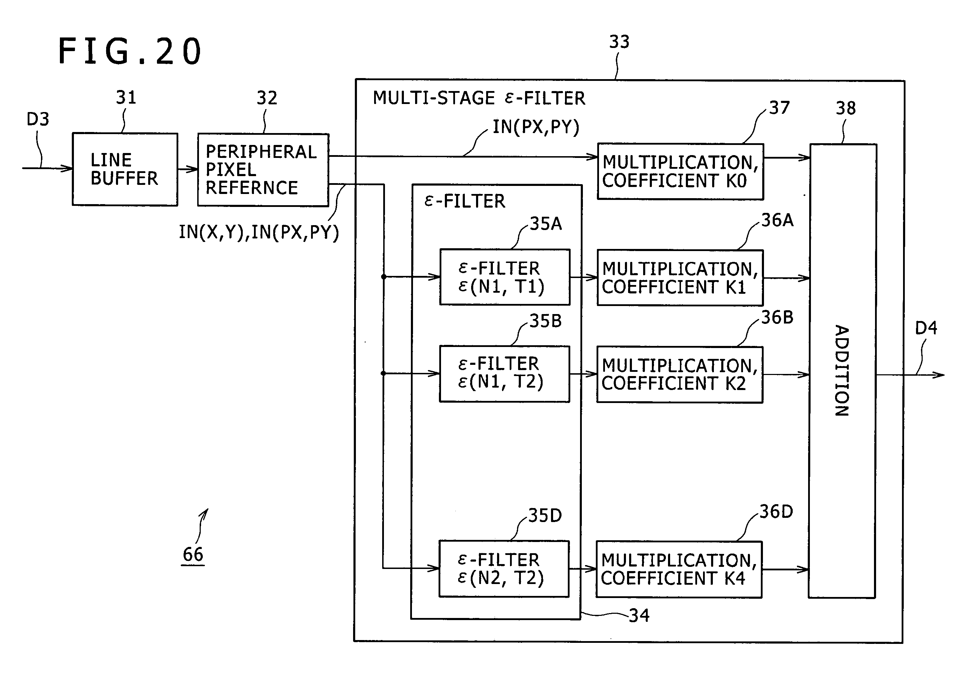

FIG. 20 is a block diagram showing a configuration of a low-frequency noise removing section which is applied to a digital still camera according to a sixth embodiment of the present invention in contrast with the first embodiment of FIG. 1. The low-frequency noise removing section 66 is configured equally to each of those in the first to fourth embodiments described above except for omission of the ε-filter 35C having the number, N2, of taps and the threshold value of T1, and the multiplying section 36C associated with the ε-filter 35C.

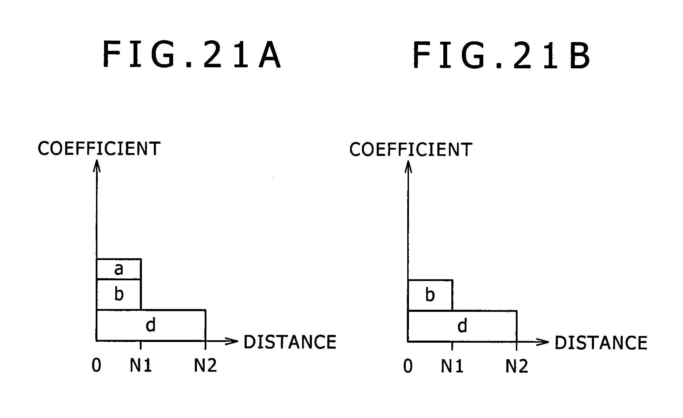

Here, as shown in FIGS. 21A and 21B in contrast with the case of FIGS. 18A and 18B, in this embodiment shown in FIG. 20, when the difference absolute value is smaller than the threshold value T1, the outputs a, b and d from the ε-filters 35A, 35B and 35D are synthesized, and the resulting synthetic output is outputted (refer to FIG. 21A). On the other hand, when the difference absolute value is larger than the threshold value T1 and is smaller than the threshold value T2, the outputs b and d from the ε-filters 35B and 35D each having the threshold value of T2 are synthesized, and the resulting synthetic output is outputted (refer to FIG. 21B). Consequently, in this embodiment as well shown in FIG. 20, by executing the weighted-addition processing corresponding to the distance between the pixel concerned and the noted pixel, and the difference value between the pixel value of the pixel concerned and the pixel value of the noted pixel, the noise components can be suppressed, thereby enhancing the noise removal performance as compared with the case where the ε-filters are merely used.

According to the sixth embodiment of the present invention, when the output values of the first ε-filter, the second ε-filter which is different in the threshold value from the first ε-filter, and the third ε-filter which is equal in the threshold value to the second ε-filter and is different in the number of taps from the first ε-filter, and the pixel value of the noted pixel are merely weighted-added to each other, it is possible to obtain the same effects as those of the first embodiment.

Seventh Embodiment

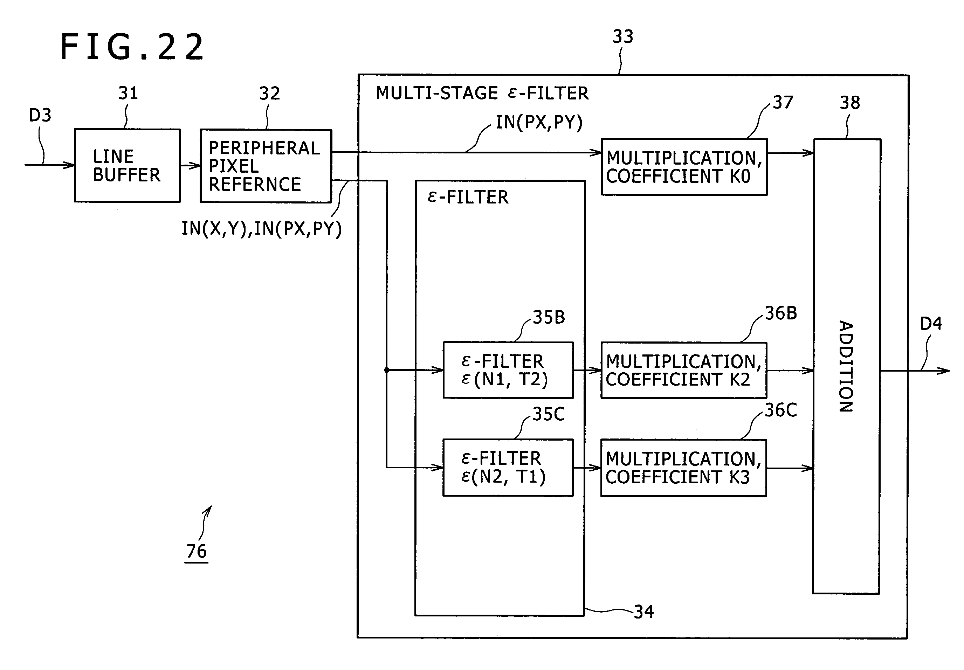

FIG. 22 is a block diagram showing a configuration of a low-frequency noise removing section which is applied to a digital still camera according to a seventh embodiment of the present invention in contrast with the first embodiment of FIG. 1. The low-frequency noise removing section 76 is configured equally to each of those in the first to fourth embodiments described above except for omission of the ε-filter 35A having the number, N1, of taps and the threshold value of T1, the multiplying section 36A associated with the ε-filter 35A, the ε-filter 35D having the number, N2, of taps and the threshold value of T2, and the multiplying section 36D associated with the ε-filter 35D.

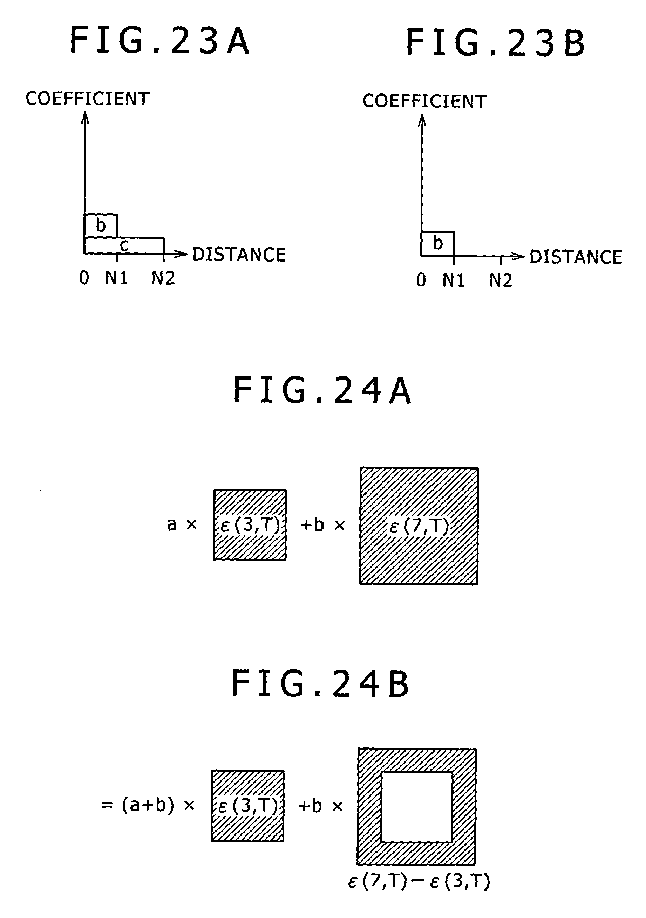

Here, as shown in FIGS. 23A and 23B in contrast with the case of FIGS. 18A and 18B, in this embodiment shown in FIG. 22, when the difference absolute value is smaller than the threshold value T1, the outputs b and c from the ε-filters 35B and 35C are synthesized, and the resulting synthetic output is outputted (refer to FIG. 23A). On the other hand, when the difference absolute value is larger than the threshold value T1 and is smaller than the threshold value T2, only the output c from the ε-filter 35B having the threshold value of T2 is outputted (refer to FIG. 23B). Consequently, in this embodiment as well shown in FIG. 22, by executing the weighted-addition processing corresponding to the distance between the pixel concerned and the noted pixel, and the difference value between the pixel value of the pixel concerned and the pixel value of the noted pixel, the noise components can be suppressed, thereby enhancing the noise removal performance as compared with the case where the ε-filters are merely used. It is noted that the ε-filter section 34 may be configured by using the ε-filters 35A and 35B, the ε-filters 35A and 35C, or the ε-filters 35A and 35D in stead of using the ε-filters 35B and 35C.

According to the seventh embodiment of the present invention, when the output values of the first ε-filter, and the second ε-filter which is different in the number of taps or the threshold value from the first ε-filter, and the pixel value of the noted pixel are merely weighted-added to each other, it is possible to obtain the same effects as those of the first embodiment.

Eighth Embodiment

Note that, in the first to seventh embodiments described above, as shown in a schematic block diagram of FIG. 24A, the description has been given so far with respect to the case where the output values of the ε-filter having three taps and the ε-filter having seven taps are weighted-added to each other with the predetermined weighting coefficients (a and b in the example of FIGS. 24A and 24B), respectively. However, the present invention is not intended to be limited thereto. That is to say, the conditional averaging processing may be executed in the remaining ε-filters so as to exclude the processing region calculated with the ε-filter having three taps as shown in FIG. 24B in contrast with the case of FIG.

24A, and the output from the ε-filter having seven taps may be obtained based on the synthesis of the results of the conditional averaging processing, and the results of calculation using the ε-filter having three taps. It is noted that in FIGS. 24A and 24B, the processing regions in the ε-filters are shown by hatching. In the case of FIGS. 24A and 24B, the processing can be further simplified.

In addition, although in the embodiments described above, the description has been given so far with respect to the case where the processing is switched over to another one in correspondence to the luminance level, the present invention is not intended to be limited thereto. That is to say, for example, a case may be adopted such that the processing is switched over to another one in correspondence to the number of samples equal to or smaller than the threshold value in the specific ε-filter instead of the luminance level. Thus, the various techniques may also be combined with one another.

In addition, although in the embodiments described above, the description has been given so far with respect to the case where the low-frequency noises are removed merely by using a plurality of ε-filters, the present invention is not intended to be limited thereto. That is to say, the noises may also be removed by using other filters such as a median filters combined with one another.

In addition, although in the embodiments described above, the description has been given so far with respect to the case where the image data is separated into the high-frequency component and the low-frequency component, thereby removing the noises, the present invention is not intended to be limited thereto. That is to say, for example, embodiments of the present invention can be generally applied to the case where the image data is separated into components having three or more frequency bands by using a band-pass filter in order to execute the desired processing, the case where the image data is directly processed without being separated into components having frequency bands, or the like.

In addition, although in the embodiments described above, the description has been given so far with respect to the case where the noises of the RAW data are removed, the present invention is not intended to be limited thereto. That is to say, embodiments of the present invention can be generally applied to the case where the noises of the image data, having the various formats, such as the full-color image data, and the image data obtained in the form of the luminance signal and the color-difference signal are removed.

In addition, although in the embodiments described above, the description has been given so far with respect to the case where the noises are removed in the stage before execution of the demosaic processing, the present invention is not intended to be limited thereto. That is to say, embodiments of the present invention can be generally applied to the cases where the noises are removed in the various processes, such as the case where the noises are removed after execution of the demosaic processing, the case where the noises are removed in the middle of the processing in the image processing section, and the case where the noises are removed after execution of the processing in the image processing section.

In addition, although in the embodiments described above, the description has been given so far with respect to the case where the ε-filter having the coefficient of one is used, the present invention is not intended to be limited thereto. That is to say, embodiments of the present invention can also be generally applied to the case where the ε-filter having the coefficient other than one is used.

In addition, although in the embodiments described above, the description has been given so far with respect to the case where the absolute value of the difference between the pixel value of the pixel concerned and the pixel value of the noted pixel, and the distance between the pixel concerned and the noted pixel are used as the parameters, and the parameters are set so that the weighting changes in accordance with the characteristics of the Gaussian curve, thereby ensuring the same characteristics as those of the bilateral filter, the present invention is not intended to be limited thereto. That is to say, the parameters may also be set so that the weighting changes in accordance with any of the various characteristics instead of the characteristics of the Gaussian curve.

In addition, although in the embodiments described above, the description has been given so far with respect to the case where the present invention is applied to the digital still camera or the digital video camera, the present invention is not intended to be limited thereto. That is to say, embodiments of the present invention can be generally applied to the various image processors and various image processing programs for processing the image data. It is noted that the image processing program may be installed in a computer, an image processor or the like in advance to be presented, or may be recorded in any of the various recording media such as an optical disc, a magnetic disc and a memory card instead to be provided. Moreover, the image processing program may also be provided by being downloaded through a network such as the Internet.

Embodiments of the present invention, for example, can be applied to the digital still camera.

It should be understood by those skilled in the art that various modifications, combinations, subcombinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An imaging apparatus, comprising:

   an imaging section for acquiring an imaging result, and outputting image data; and
   a noise suppressing section for suppressing a noise of the image data, and outputting output data;

   wherein said noise suppressing section includes:

   a first ε-filter for processing the image data;
   a second ε-filter for processing the image data, the number of taps of said second ε-filter being different from that of said first ε-filter, a threshold value of said second ε-filter being equal to that of said first ε-filter;
   a third ε-filter for processing the image data, the number of taps of said third ε-filter being equal to that of said first ε-filter, a threshold value of said third ε-filter being different from that of said first ε-filter;
   a fourth ε-filter for processing the image data, the number of taps of said fourth ε-filter being equal to that of said second ε-filter, a threshold value of said fourth ε-filter being equal to that of said third ε-filter; and
   a weighted-adding unit for weighted-adding an output value of said first ε-filter, an output value of said second ε-filter, an output value of said third ε-filter, an output value of said fourth ε-filter, and a pixel value of a noted pixel in the image data, and outputting the output data.

2. The imaging apparatus according to claim 1, further comprising a control section for detecting a luminance level of the image data, and varying a weighting coefficient in said weighted-adding unit based on a result of detection of the luminance level so that an output signal component of the ε-filter having the less number of taps increases at a section having the lower luminance level.

3. The imaging apparatus according to claim 1, further comprising a control section for detecting a luminance level of the image data, and varying the threshold values of said first to fourth ε-filters based on a result of detection of the luminance level so that each of the threshold values increases at a section having the higher luminance level.

4. An imaging apparatus, comprising:

   an imaging section for acquiring an imaging result, and outputting image data; and
   a noise suppressing section for suppressing a noise of the image data, and outputting output data;

   wherein said noise suppressing section includes:

   a first ε-filter for processing the image data;
   a second ε-filter for processing the image data, the number of taps of said second ε-filter being different from that of said first ε-filter, a threshold value of said second ε-filter being equal to that of said first ε-filter;
   a third ε-filter for processing the image data, the number of taps of said third ε-filter being equal to that of said first ε-filter, a threshold value of said third ε-filter being different from that of said first ε-filter; and
   a weighted-adding unit for weighted-adding an output value of said first ε-filter, an output value of said second ε-filter, an output value of said third ε-filter, and a pixel value of a noted pixel in the image data, and outputting the output data.

5. An imaging apparatus, comprising:

   an imaging section for acquiring an imaging result, and outputting image data; and
   a noise suppressing section for suppressing a noise of the image data, and outputting output data;

   wherein said noise suppressing section includes:

   a first e-filter for processing the image data;
   a second ε-filter for processing the image data, a threshold value of said second ε-filter being different from that of said first ε-filter, the number of taps of said second ε-filter being equal to that of said first ε-filter;

a third ε-filter for processing the image data, a threshold value of said third ε-filter being equal to that of said second ε-filter, the number of taps of said third ε-filter being different from that of said first ε-filter; and

a weighted-adding unit for weighted-adding an output value of said first ε-filter, an output value of said second ε-filter, an output value of said third ε-filter, and a pixel value of a noted pixel in the image data, and outputting the output data.

**6.** An imaging apparatus, comprising:

an imaging section for acquiring an imaging result, and outputting image data; and

a noise suppressing section for suppressing a noise of the image data, and outputting output data;

wherein said noise suppressing section includes:

a first ε-filter for processing the image data;

a second ε-filter for processing the image data, the number of taps and/or a threshold value of said second ε-filter being different from that of said first ε-filter; and

a weighted-adding unit for weighted-adding an output value of said first ε-filter, an output value of said second ε-filter, and a pixel value of a noted pixel in the image data, and outputting the output data.

**7.** A noise removing device, comprising:

a first ε-filter for processing the image data;

a second ε-filter for processing the image data, the number of taps of said second ε-filter being different from that of said first ε-filter, a threshold value of said second ε-filter being equal to that of said first ε-filter;

a third ε-filter for processing the image data, the number of taps of said third ε-filter being equal to that of said first ε-filter, a threshold value of said third ε-filter being different from that of said first ε-filter;

a fourth ε-filter for processing the image data, the number of taps of said fourth ε-filter being equal to that of said second ε-filter, a threshold value of said fourth ε-filter being equal to that of said third ε-filter; and

a weighted-adding unit for weighted-adding an output value of said first ε-filter, an output value of said second ε-filter, an output value of said third ε-filter, an output value of said fourth ε-filter, and a pixel value of a noted pixel in the image data, and outputting the output data.

**8.** A noise removing method, comprising the steps of:

processing image data by a first ε-filter;

processing the image data by a second ε-filter, the number of taps of said second ε-filter being different from that of said first ε-filter, a threshold value of said second ε-filter being equal to that of said first ε-filter;

processing the image data by a third ε-filter, the number of taps of said third ε-filter being equal to that of said first ε-filter, a threshold value of said third ε-filter being different from that of said first ε-filter;

processing the image data by a fourth ε-filter, the number of taps of said fourth ε-filter being equal to that of said second ε-filter, a threshold value of said fourth ε-filter being equal to that of said third ε-filter; and

weighted-adding an output value of said first ε-filter, an output value of said second ε-filter, an output value of said third ε-filter, an output value of said fourth ε-filter, and a pixel value of a noted pixel in the image data, and outputting the output data.

**9.** A program for a noise removing method, comprising the steps of:

processing image data by a first ε-filter;

processing the image data by a second ε-filter, the number of taps of said second ε-filter being different from that of said first ε-filter, a threshold value of said second ε-filter being equal to that of said first ε-filter;

processing the image data by a third ε-filter, the number of taps of said third ε-filter being equal to that of said first ε-filter, a threshold value of said third ε-filter being different from that of said first ε-filter;

processing the image data by a fourth ε-filter, the number of taps of said fourth ε-filter being equal to that of said first ε-filter, a threshold value of said fourth ε-filter being equal to that of said third ε-filter; and

weighted-adding an output value of said first ε-filter, an output value of said second ε-filter, an output value of said third ε-filter, an output value of said fourth ε-filter, and a pixel value of a noted pixel in the image data, and outputting the output data.

**10.** A recording medium for recording therein a program for a noise removing method of removing a noise of image data, said program for said noise removing method comprising the steps of:

processing the image data by a first ε-filter;
processing the image data by a second ε-filter, the number of taps of said second ε-filter being different from that of said first ε-filter, a threshold value of said second ε-filter being equal to that of said first ε-filter;
processing the image data by a third ε-filter, the number of taps of said third ε-filter being equal to that of said first ε-filter, a threshold value of said third ε-filter being different from that of said first ε-filter;
processing the image data by a fourth ε-filter, the number of taps of said fourth ε-filter being equal to that of said second ε-filter, a threshold value of said fourth ε-filter being equal to that of said third ε-filter; and
weighted-adding an output value of said first ε-filter, an output value of said second ε-filter, an output value of said third ε-filter, an output value of said fourth ε-filter, and a pixel value of a noted pixel in the image data, and outputting the output data.

**11.** An imaging apparatus, comprising:

imaging means for acquiring an imaging result, and outputting image data; and
noise suppressing means for suppressing a noise of the image data, and outputting output data;

wherein said noise suppressing section includes:

a first ε-filter for processing the image data;
a second ε-filter for processing the image data, the number of taps of said second ε-filter being different from that of said first ε-filter, a threshold value of said second ε-filter being equal to that of said first ε-filter;
a third ε-filter for processing the image data, the number of taps of said third ε-filter being equal to that of said first ε-filter, a threshold value of said third ε-filter being different from that of said first ε-filter;
a fourth ε-filter for processing the image data, the number of taps of said fourth ε-filter being equal to that of said second ε-filter, a threshold value of said fourth ε-filter being equal to that of said third ε-filter; and
a weighted-adding unit for weighted-adding an output value of said first ε-filter, an output value of said second ε-filter, an output value of said third ε-filter, an output value of said fourth ε-filter, and a pixel value of a noted pixel in the image data, and outputting the output data.

# FIG. 1

# FIG. 2

IMAGING DEVICE (13) → PREPROCESSING (14) → D1 → OPTICAL CORRECTION (15) → D2 → IMAGE PROCESSING (16) → ENC (17) → IF (18) → RECORDING MEDIUM (19)

11

# FIG.3

EP 1 947 837 A2

# FIG.4

# FIG.5

# F I G . 6

Wex100

100
61
14

0  1  2  3

DIFFERENCE
ABSOLUTE VALUE

# F I G . 7

Wex100

100
61
14

39
47
14

0  1  2  3

DIFFERENCE
ABSOLUTE VALUE

# F I G . 8

Wex100

100

61

14

0    10   20   30

DIFFERENCE
ABSOLUTE VALUE

# F I G . 9

Wex100

100    39

61

47

14

14

0    10   20   30

DIFFERENCE
ABSOLUTE VALUE

# FIG.10

**3 taps**

$\varepsilon(3,2)$ × 14/100

+

$\varepsilon(3,1)$ × 47/100

+

$\varepsilon(3,0)$ × 39/100

× 6/13 +

**7 taps**

$\varepsilon(7,2)$ × 14/100

+

$\varepsilon(7,1)$ × 47/100

+

$\varepsilon(7,0)$ × 39/100

× 7/13

# FIG.11

START ——SP1

i = 0 ——SP2

j = 0 ——SP3

sum = 0 ——SP4

ADD MULTIPLICATION RESULT TO sum ——SP5

k = 0 ——SP6

ADD MULTIPLICATION RESULT FOR
ε-FILTER SPECIFIED BY k TO sum ——SP7

k = k+1 ——SP8

SP9
YES ◇ k<4? ◇
NO

OUTPUT sum ——SP10

j = j+1 ——SP11

SP12
YES ◇ j<width? ◇
NO

i = i+1 ——SP13

SP14
YES ◇ i<height? ◇
NO

END ——SP15

# FIG.12

EP 1 947 837 A2

# FIG.13

αs

3/4

1/4

LUMINANCE

IN(N,Y)

# FIG.14

# FIG.15

αe

20

10

LUMINANCE IN(N,Y)

# FIG.16

Wex100

100

39

61

47

14

14

0    αe    2αe    3αe

DIFFERENCE
ABSOLUTE VALUE

# FIG.17

LINE BUFFER **31** → PERIPHERAL PIXEL REFERNCE **32**

D3 →

IN(X,Y),IN(PX,PY)

**33** MULTI-STAGE ε-FILTER

IN(PX,PY)

MULTIPLICATION, COEFFICIENT K0 **37** → ADDITION **38** → D4

ε-FILTER

ε-FILTER ε(N1, T1) **35A** → MULTIPLICATION, COEFFICIENT K1 **36A**

ε-FILTER ε(N1, T2) **35B** → MULTIPLICATION, COEFFICIENT K2 **36B**

ε-FILTER ε(N2, T1) **35C** → MULTIPLICATION, COEFFICIENT K3 **36C**

**34**

**56**

EP 1 947 837 A2

# FIG.18A

COEFFICIENT

COEFFICIENT

a
b
c
d

0　N1　N2

DISTANCE

# FIG.18B

COEFFICIENT

b
d

0　N1　N2

DISTANCE

# FIG.19A

COEFFICIENT

a
b
c

0　N1　N2

DISTANCE

# FIG.19B

COEFFICIENT

b

0　N1　N2

DISTANCE

# FIG.20

# FIG.21A    FIG.21B

**FIG.21A**

COEFFICIENT

```
a
b
    d
```

0   N1      N2   → DISTANCE

**FIG.21B**

COEFFICIENT

```
b
    d
```

0   N1      N2   → DISTANCE

# FIG.22

EP 1 947 837 A2

# FIG.23A

COEFFICIENT

b

c

0  N1  N2  DISTANCE

# FIG.23B

COEFFICIENT

b

0  N1  N2  DISTANCE

# FIG.24A

$$a \times \varepsilon(3,T) + b \times \varepsilon(7,T)$$

# FIG.24B

$$= (a+b) \times \varepsilon(3,T) + b \times$$

$$\varepsilon(7,T) - \varepsilon(3,T)$$

# FIG.25

EP 1 947 837 A2

# FIG.26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004172726 A

- JP 2006180268 A